# FASCICULE DE BREVET EUROPEEN

(11) **EP 1 771 489 B1**
(45) Date de publication et mention de la délivrance du brevet: **08.10.2008**
(21) Numéro de dépôt: 05778247.6
(22) Date de dépôt: 21.06.2005
(51) Int. Cl.: C08G 18/52, C08L 81/02, C08K 5/06

(54) **COMPOSITION POLYMERISABLE COMPRENANT UN AGENT DE MASQUAGE DES ODEURS ET UN PARFUM, LENTILLE OPTIQUE OBTENUE ET PROCEDE DE FABRICATION**
POLYMERISIERBARE VERBINDUNG MIT GERUCHSMASKIERENDEM MITTEL UND EINEM PARFUM, EINE OPTISCHE LINSE UND EIN HERSTELLUNGSVERFAHREN
POLYMERISABLE COMPOSITION CONTAINING AN ODOUR MASKING AGENT AND A PERFUME, AN OPTICAL LENS AND A PRODUCTION METHOD

(30) Priorité: 21.06.2004 FR 0451300
(43) Date de publication de la demande: 11.04.2007
(73) Titulaire: ESSILOR INTERNATIONAL (Compagnie Générale d'Optique), 94220 Charenton le Pont (FR)
(72) Inventeur: HABASSI, Chefik, F-94490 ORMESSON/MARNE (FR); ROOS, Alexandra, F - 94220 Charenton-Le-Pont (FR); LY, Léang, F-93360 NEUILLY PLAISANCE (FR)
(74) Mandataire: Catherine, Alain
(86) Numéro de dépôt international: PCT/FR2005/050476
(87) Numéro de publication internationale: WO 2006/005874

(56) Documents cités:
- US-A- 3 754 039
- US-A- 5 874 073
- US-A1- 2003 231 280
- DATABASE WPI Section Ch, Week 200375 Derwent Publications Ltd., London, GB; Class A89, AN 2003-792572 XP002304251 & JP 2003 066383 A (LION CORP) 5 mars 2003 (2003-03-05) cité dans la demande
- DATABASE WPI Section Ch, Week 198633 Derwent Publications Ltd., London, GB; Class A14, AN 1986-215477 XP002352866 & JP 61 147201 A (TORAY IND INC) 4 juillet 1986 (1986-07-04)

## Description

La présente invention a pour objet une nouvelle composition polymérisable, une lentille optique obtenue par polymérisation de ladite composition, ainsi qu'un procédé de préparation d'un substrat à base de polythiouréthane.

Une lentille optique, et en particulier une lentille ophtalmique, résulte d'une succession d'opérations de moulage et/ou de surfaçage / polissage qui déterminent la géométrie des deux surfaces optiques convexe et concave de ladite lentille, puis de traitements de surface appropriés.

La dernière étape de finition d'une lentille ophtalmique est l'opération de débordage qui consiste à usiner la tranche ou la périphérie de la lentille de façon à la conformer aux dimensions requises pour adapter le verre à la monture de lunette dans laquelle il est destiné à prendre place.

Le débordage est réalisé généralement par meulage ou par fraisage.

Ces opérations de surfaçage et de débordage génèrent souvent des mauvaises odeurs. Cela est particulièrement vrai lorsque que le substrat dont est formé la lentille comprend des composés soufrés, tels que des polythio(méth)acrylates, des polythiouréthanes ou des polyépisulfures.

Le document de brevet JP 04294301 décrit des résines thiométhacryliques comprenant un éther cyclique à titre de parfum, par exemple le 1,8-cinéole.

Le document de brevet JP 5273401 décrit une lentille optique de polythiouréthane résultant de la polymérisation d'un mélange de monomères comprenant de l'huile d'eucalyptus.

Le document de brevet JP 6049366 décrit une résine soufrée comprenant de l'huile d'eucalyptus pour réduire les mauvaises odeurs générées pendant le traitement thermique ou les opérations de coupe de la résine.

Le but de la présente invention est de proposer des compositions polymérisables permettant de supprimer plus efficacement la perception des mauvaises odeurs dégagées lors du surfaçage et/ou du débordage d'un verre obtenu à partir de la composition polymérisable.

La Demanderesse a découvert que l'utilisation d'un agent masquant choisi parmi les éthers cycliques et d'un parfum choisi parmi les muscs polycycliques ou macrocycliques dans une composition polymérisable permettait de supprimer de façon améliorée les mauvaises odeurs dégagées lors du surfaçage et/ou lors du débordage d'un verre, ou de dégager des odeurs agréables lors de cette opération.

L'invention a donc d'abord pour objet une composition comprenant au moins un monomère polymérisable, ladite composition comprenant en outre au moins un agent masquant choisi parmi les éthers cycliques et au moins un parfum choisi parmi les muscs naturels et leurs extraits, les muscs synthétiques, et leurs mélanges.

Préférentiellement, les muscs synthétiques utilisés sont les muscs monocycliques, polycycliques ou macrocycliques.

Par musc naturel, on entend au sens de la présente invention un composé issu d'une sécrétion extraite de la poche abdominale du chevrotain-porte-musc Moschus Moschiferus.

Les muscs monocycliques préférés sont des muscs comprenant un cycle en C₅ ou C₆, préférentiellement comprenant au moins un groupement cétonique ou ester.

Les muscs polycycliques préférés sont des muscs comprenant au moins 2 cycles hydrocarbonés en C₅ ou C₆, éventuellement interrompus par un ou plusieurs atomes d'oxygène.

Les muscs macrocycliques préférés sont des muscs comprenant un cycle hydrocarboné en C₇-C₁₈, préférentiellement ex C₁₂ ou C₁₈, et mieux en C₁₅, C₁₆ ou C₁₇, éventuellement interrompus par un ou plusieurs atomes d'oxygène.

Ces différentes molécules de musc sont disponibles auprès de nombreux fournisseurs tels que IFF (International Flavors and Fragrances - Bois Colombes France), Interchim, Sigma Aldrich Chimie (Saint Quentin Fallavier), Aroma and Fine Chemicals (Givaudan), qui répertorient ces molécules en tant que muscs.

La composition polymérisable selon l'invention est particulièrement efficace lorsque la composition comprend un ou plusieurs monomères soufrés.

Ainsi, selon un premier mode de réalisation de l'invention, la composition comprend un ou plusieurs monomères choisis parmi les monomères contenant au moins un atome de soufre.

De préférence, les monomères contenant au moins un atome de soufre sont choisis parmi les monomères précurseurs des polythio(méth)acrylates, des polythiouréthanes, des polythiouréthane-urée et des polyépisulfures.

Les monomères précurseurs des polythio(méth)acrylates convenant pour la composition selon l'invention comprennent au moins un, de préférence deux groupes de formule : 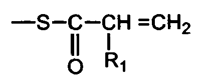 avec R₁ = H ou CH₃.

Ils peuvent répondre à la formule suivante : 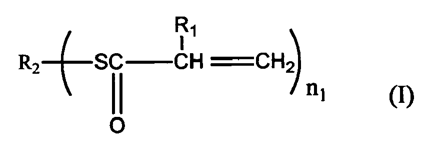 dans laquelle :
R₂ représente un radical hydrocarboné aliphatique, linéaire ou ramifié, monovalent ou polyvalent, ou un groupement aromatique ou hétérocyclique monovalent ou polyvalent directement lié à l'atome de soufre du ou des groupements thio(méth)acrylates par un noyau ou par l'intermédiaire d'une chaîne alkyle linéaire, le radical R₂ pouvant comporter dans sa chaîne un ou plusieurs groupes choisis parmi -O-, - S-, -CO-;
R₁ représente l'hydrogène ou -CH₃ ; et
n₁ est un entier de 1 à 6, de préférence de 1 à 3.

Parmi les radicaux R₂ monovalents, on peut citer les radicaux alkyle, linéaires, ou ramifiés, de C₁ à C₅, les radicaux de formule : 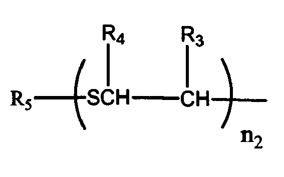 dans laquelle :
R₃ et R₄ sont, indépendamment les uns des autres, H ou un radical alkyle, linéaire ou ramifié en C₁-C₅ ;
R₅ est un radical alkyle, linéaire ou ramifié en C₁-C₅, un radical aralkyle en C₇-C₁₀ ou un radical aryle en C₆-C₁₂, éventuellement substitué, en particulier par des groupes alkyle et/ou halogène ; et
n₂ est un entier de 1 à 4.

Parmi les radicaux R₂ monovalents préférés, on peut citer :
C₂H₅SCH₂CH₂-;

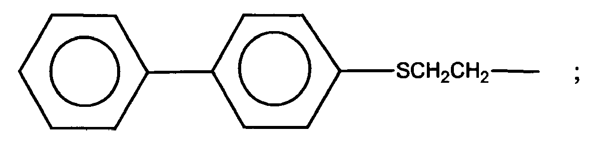

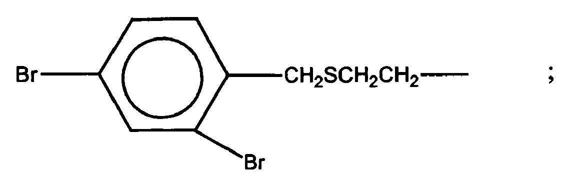

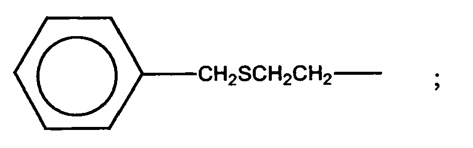

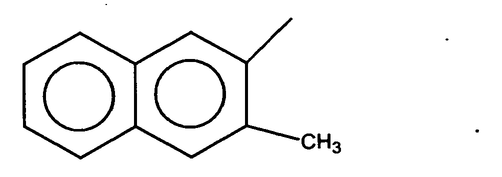

Des monomères de formule (I) pour lesquels n₁=1 et tels que définis ci-dessus, sont décrits, entre autres, dans les brevets US-A-4606864, JP-6331766 et EP-A-0384725.

Parmi les radicaux R₂ divalents entrant dans le cadre des monomères de formule (I), on peut citer les radicaux alkylène, linéaires ou ramifiés, en C₂-C₁₀ pouvant comporter dans leur chaîne un ou plusieurs groupes -O-, -S-, -CO- ; les radicaux alkylidène de formule 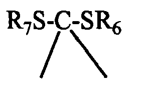 dans laquelle R₆ et R₇ sont des radicaux alkyle en C₁-C₅, les radicaux de formule : 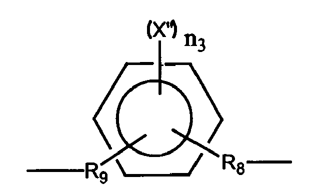 dans laquelle R₈ et R₉ sont des groupes alkylène, linéaires ou ramifiés, en C₁-C₅ pouvant comporter un ou plus groupes -O-, -S- ou -CO- dans leurs chaînes et X" est choisi parmi les radicaux alkyle en C₁-C₅ et les halogènes, et n₃ est un entier de 0 à 4, et les radicaux de formule 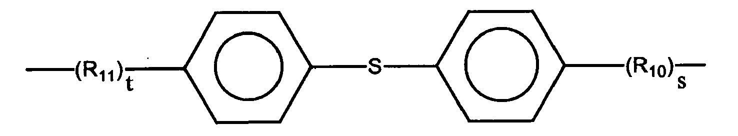 dans laquelle R₁₀ et R₁₁ sont des radicaux alkyle, linéaires ou ramifiés en C₁-C₅, pouvant comporter dans leur chaîne un ou plusieurs groupes -O-, -S- ou -CO- et t et s sont égaux à 0 ou 1.

Parmi les radicaux R₂ divalents préférés, on peut citer les radicaux -(CH₂)_{q'}-, où q' est un entier de 1 à 8 ;
-(CH₂CH₂X)ᵤ-CH₂CH₂- où X est -O- ou -S-, et u est un entier de 1 à 4 ;
-(CH₂)_{u'}-[S(CH₂)_{v'}]_{z'}-(CH₂)_{w'}-, où z' est égal à 0 ou 1, et u', v', w' sont des entiers de 2 à 6 : 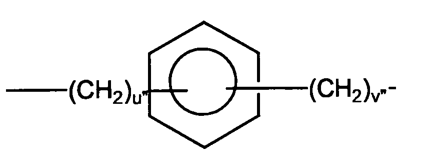 où u" et v" sont des entiers de 1 à 4, 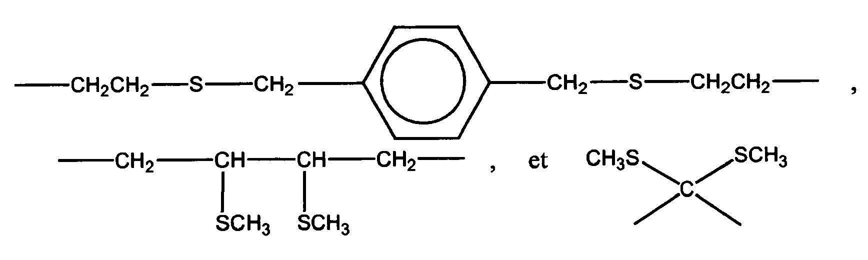 Les radicaux R₂ divalents particulièrement préférés sont : 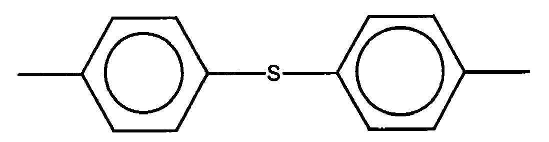 and -H₄C₂-S-C₂H₄-.

Des monomères de formule (I) divalents sont décrits, entre autres, dans les brevets EP-A-273661, EP-A-273710, EP-A-384725.

Parmi les radicaux R₂ trivalents des monomères de formule (I), on peut citer les radicaux alkyltriyle en C₃-C₁₀ pouvant comporter dans leur chaîne, un ou plusieurs groupes -O-, -S- ou -CO-, les radicaux alkylaryle trivalents dont les chaînes alkyle peuvent comporter un ou plusieurs groupes -O-, -S- ou -O-, et les groupes aryle trivalents.

Parmi les radicaux R₂ trivalents ou de valence supérieure, on peut citer :

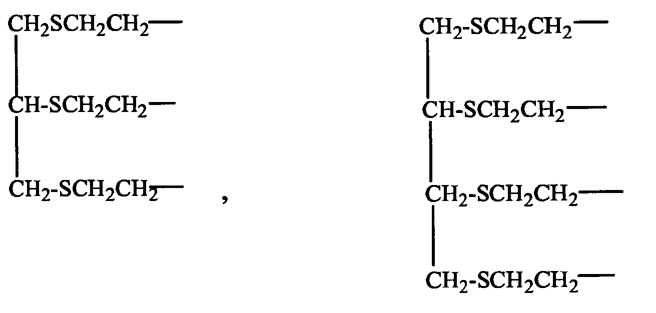

Parmi les monomères de formule (I) recommandés dans la présente invention, on peut citer : 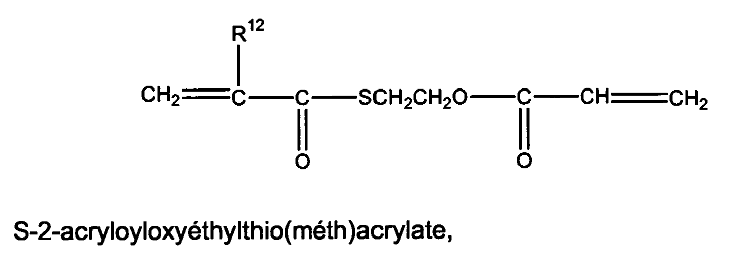 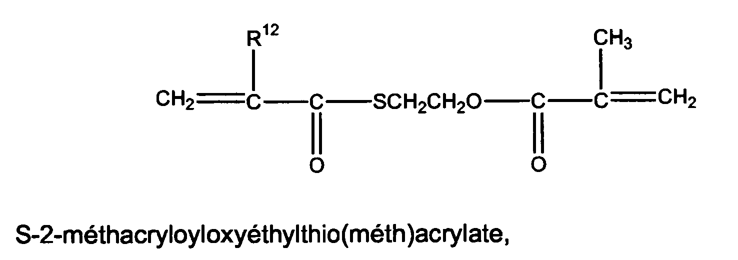 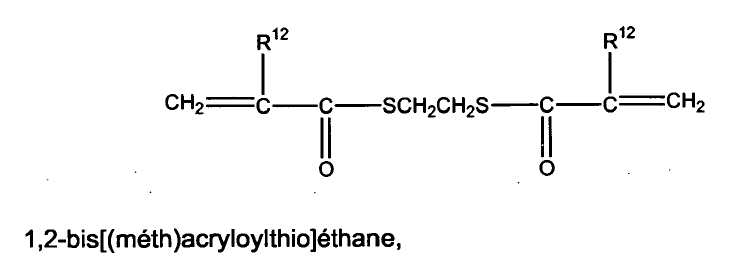 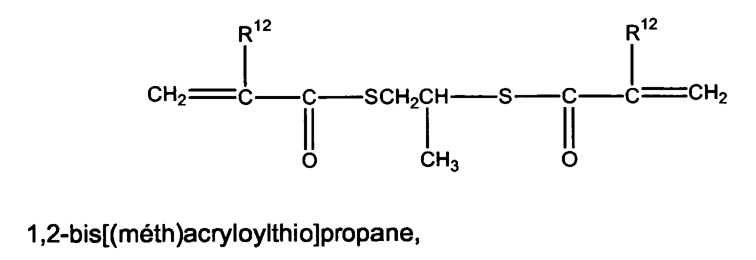 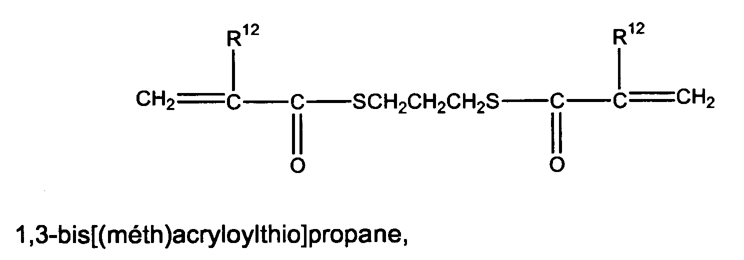 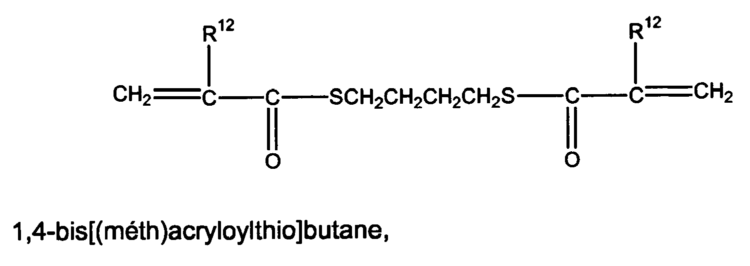 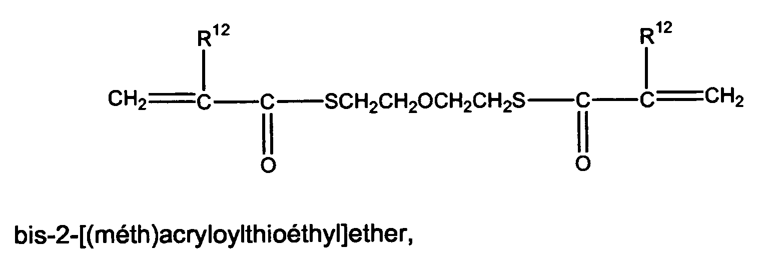 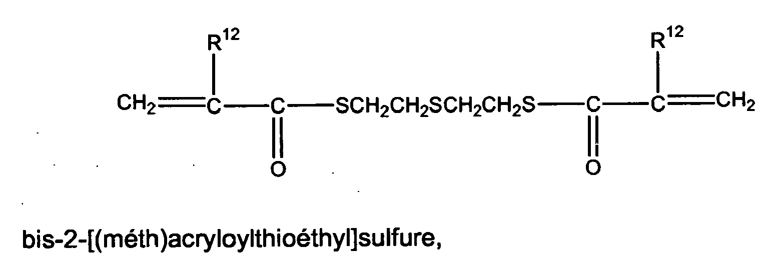 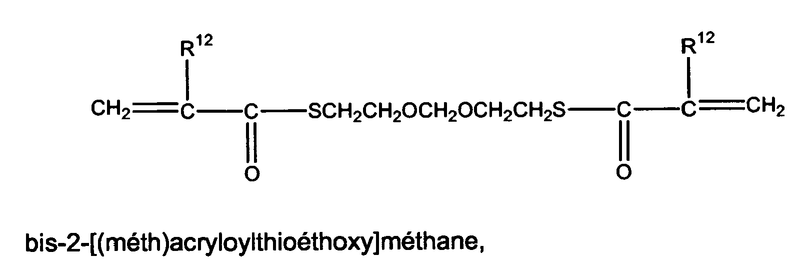 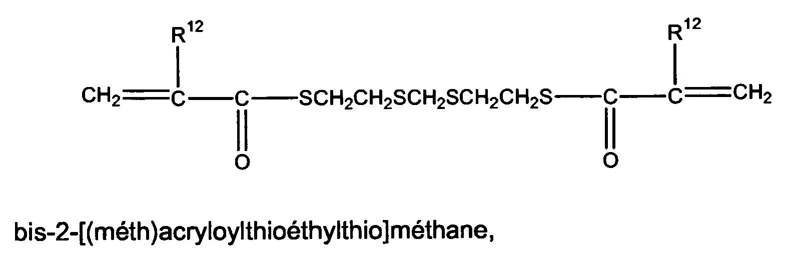 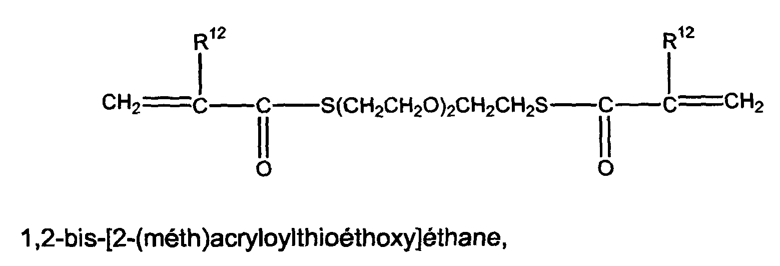 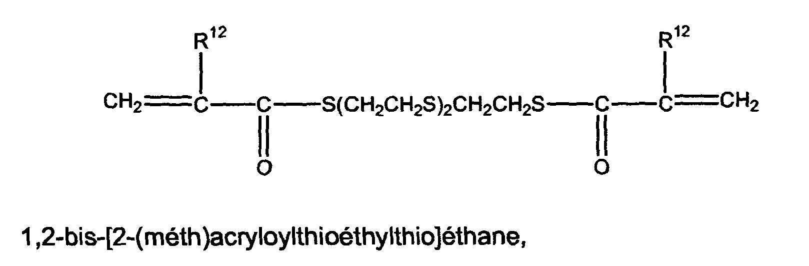 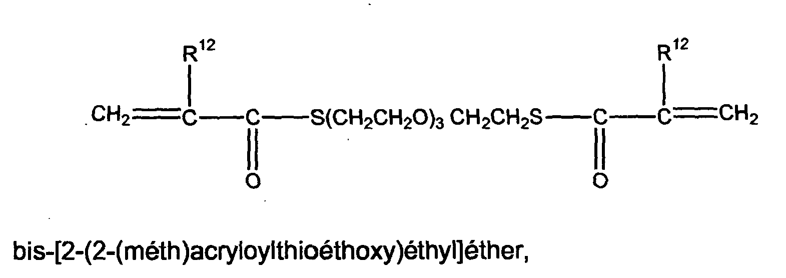 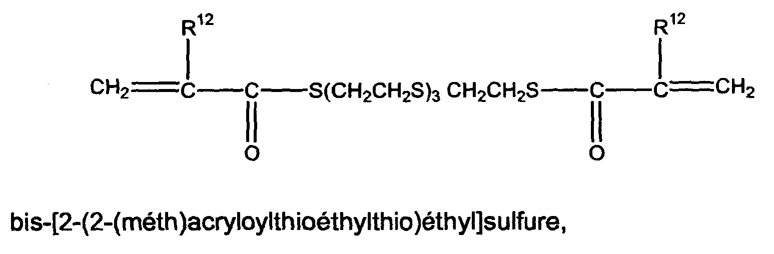 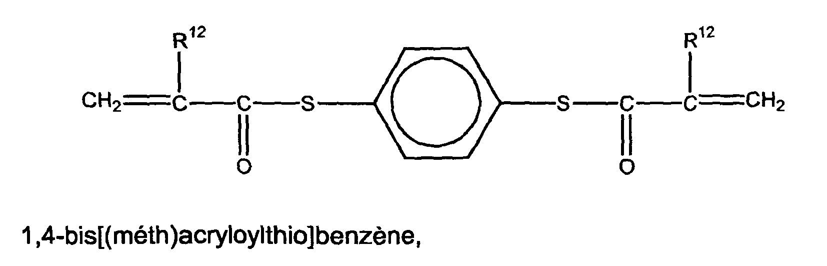 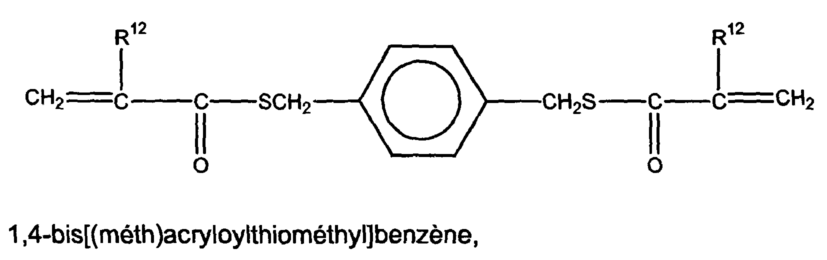 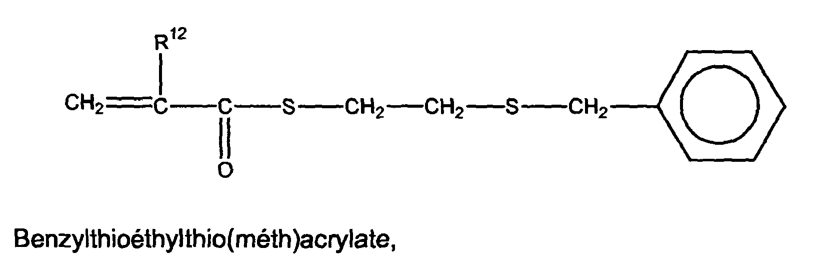 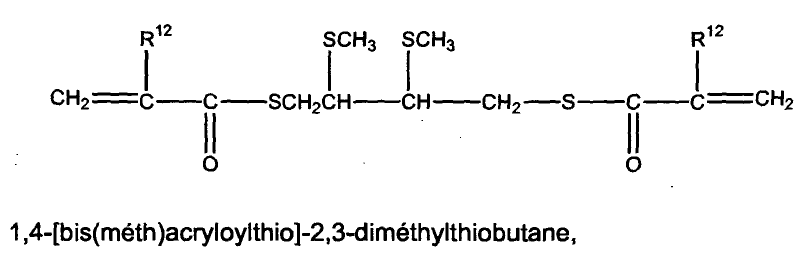 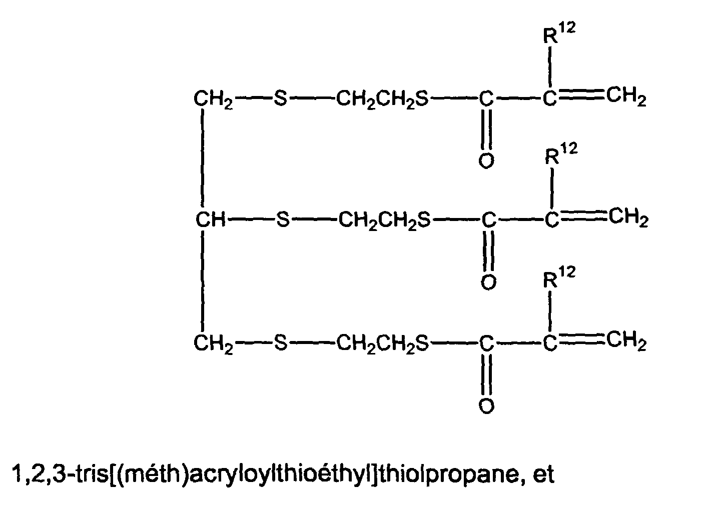 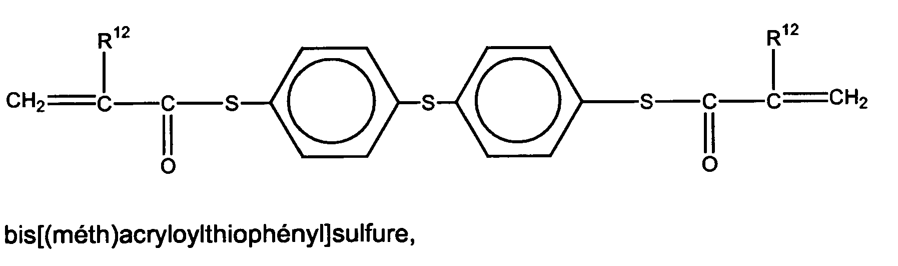 où R¹² est H ou CH₃.

Une autre classe de monomères thio(méth)acryliques convenant dans les compositions selon l'invention répondent à la formule : 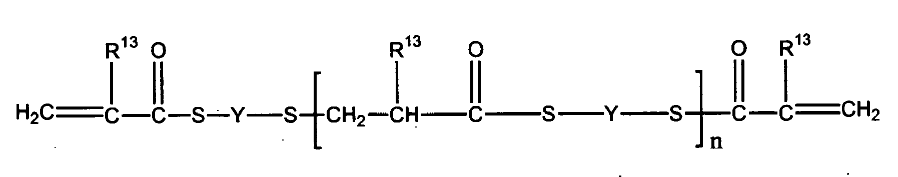 dans laquelle R¹³ représente H ou CH₃, Y représente un groupe alkylène, éventuellement ramifié, en C₂-C₁₂, un groupe cycloalkylène en C₃-C₁₂, un groupe arylène en C₆-C₁₄ ou un groupe alkarylène en C₇-C₂₆, la chaîne carbonée du groupe Y pouvant être interrompue par un ou plusieurs groupes éther ou thioéther, et n est un entier de 1 à 6.

De tels monomères sont décrits dans le brevet US 5 384 379.

Un monomère polythiométhacrylate recommandé est le bis(2-méthacryloylthioéthyl]sulfure (BMTES).

Des monomères précurseurs des polythio(méth)acrylates utilisables dans la composition selon l'invention sont décrits notamment dans le brevet US 5 741 831.

Selon le premier mode de réalisation de l'invention, la composition polymérisable comprend de préférence des monomères précurseurs de poly(thio)uréthanes, polyols et/ou polythiols et polyiso(thio)cyanates éventuellement soufrés.

En particulier, la composition selon l'invention comprend de préférence au moins un monomère polythiol et au moins un monomère polyisocyanate.

Les monomères polythiols convenant pour les compositions selon la présente invention sont, bien connus, dans la technique et peuvent être représentés par la formule R'(SH)_{n'}, dans laquelle n' est un entier de 2 ou plus, de préférence de 2 à 5, et R' un radical aliphatique, aromatique ou hétérocyclique.

Les polythiols sont décrits entre autre dans le document EP 394 495.

Parmi les polythiols utilisables dans la composition selon l'invention, on peut citer le 9,10-anthracènediméthanethiol, le 1,11-undécanedithiol, le 4-éthyl-benzène-1,3-dithiol, le 1,2-éthanedithiol, le 1,8-octanedithiol, le 1,18-octadécanedithiol, le 2,5-dichlorobenzène-1,3-dithiol, le 1,3-(4-chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le 4,8-dithioundécane-1,11-dithiol, le dithiopentaérythritol, le dithiothréitol, le 1,3 diphénylpropane-2,2-dithiol, le 1,3-dihydroxy-2-propyl-2',3'-dimercaptopropyléther, le 2,3-dihydroxypropyl-2',3'-dimercaptopropyléther, le 2,6-diméthyloctane-2,6-dithiol, le 2,6-diméthyloctane-3,7-dithiol, le 2,4-diméthylbenzène-1,3-dithiol, le 4,5-diméthylbenzène-1,3-dithiol, le 3,3-diméthylbutane-2,2-dithiol, le 2,2-diméthylpropane-1,3-dithiol, le 1,3-di(4-méthoxyphényl)propane-2,2-dithiol, le 3,4-diméthoxybutane-1,2-dithiol, l'acide 10,11-dimercaptoundécanoïque, l'acide 6,8-dimercapto-octanoïque, le 2,5-dimercapto-1,3,4-thiadiazole, le 2,2'-dimercapto-biphényle, le 4,4'-dimercaptobiphényle, le 4,4'-dimercaptobibenzyle, le 3,4-dimercaptobutanol, le 3,4-dimercaptobutylacétate, le 2,3-dimercapto-1-propanol, le 1,2-dimercapto-1,3-butanediol, l'acide 2,3-dimercaptopropionique, le 1,2-dimercaptopropyl-méthyléther, le 2,3-dimercaptopropyl-2',3'-diméthoxypropyélther, le 3,4-thiophènedithiol, le 1,10-décanedithiol, le 1,12-docécanedithiol, le 3,5,5-triméthylhexane-1,1-dithiol, le 2,5-toluènedithiol, le 3,4-toluènedithiol, le 1,4-naptalènedithiol, le 1,5-naphtalènedithiol, le 2,6-naphtalènedithiol, le 1,9-nonanedithiol, le norbornène-2,3-dithiol, le bis(2-mercaptoisopropyl)éther, le bis(11-mercaptoundécyl)sulfure, le bis(2-mercaptoéthyl)éther, le bis(2-mercaptoéthyl)sulfure, le bis(18-mercaptooctadécyl)sulfure, le bis(8-mercaptooctyl)sulfure, le bis(12-mercapto-décyl)sulfure, le bis(9-mercaptononyl)sulfure, le bis(4-mercaptobutyl)sulfure, le bis(3-mercaptopropyl)éther, le bis(3-mercaptopropyl)sulfure, le bis(6-mercaptohexyl)sulfure, le bis(7-mercaptoheptyl)sulfure, le bis(5-mercaptopentyl)sulfure, l'acide 2,2'-bis(mercaptométhyl)acétique, le 1,1-bis(mercaptométhyl)cyclohexane, le bis (mercaptométhyl)durène, le phénylméthane-1,1-dithiol, le 1,2-butanedithiol, le 1,4-butanedithiol, le 2,3-butanedithiol, le 2,2-butanedithiol, le 1,2-propanedithiol, le 1,3-propanedithiol, le 2,2-propanedithiol, le 1,2-hexanedithiol, le 1,6-hexanedithiol, le 2,5-hexanedithiol, le 1,7-heptanedithiol, le 2,6-heptanedithiol, le 1,5-pentanedithiol, le 2,4-pentanedithiol, le 3,3-pentanedithiol, le 7,8-heptadécanedithiol, le 1,2-benzènedithiol, le 1,3-benzènedithiol, le 1,4-benzènedithiol, le 2-méthylcyclohexane-1,1-dithiol, le 2-méthylbutane-2,3-dithiol, l'éthylène glycol dithioglycolate, l'éthylène glycol bis(3mercaptopropionate). Parmi les trithiols, on peut citer le 1,2,3-propanetrithiol, le 1,2,4-butanetrithiol, le triméthylolpropanetrithiol glycolate, le triméthylopropane tris(3-mercaptopropionate), le pentaérythritol trithioglycolate, le pentaérythritol tris(3-mercaptopropionate), le 1,3,5-benzènetrithiol, et le 2,4,6-mésitylènetrithiol.

On peut encore citer parmi les polythiols utiles dans les compositions de la présente invention, le néopentane tétrathiol, le 2,2'-bis(mercaptométhyl)-1,3-propanedithiol, le pentaérythritol tétrakis(3-mercaptopropionate), le 1,3,5-benzènetrithiol, le 2,4,6-toluènetrithiol, le 2,4,6-méthylènetrithiol, et les polythiols correspondant aux formules : 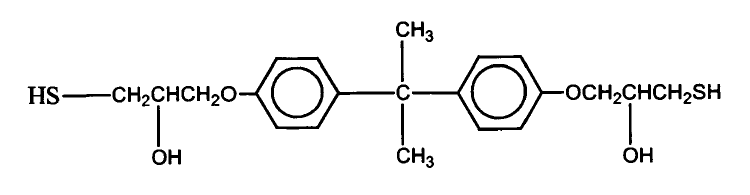 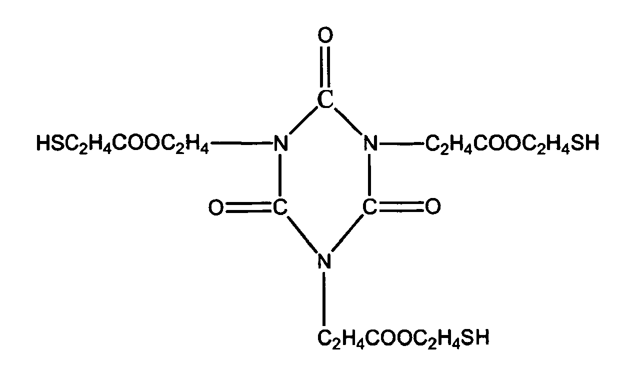 (HSCH₂CH₂COOCH₂)₃CC₂H₅ (TTMP), et
le 4-mercaptométhyl-3,6-dithia-1,8-octanedithiol.

Un polythiol préféré est le composé de formule suivante :

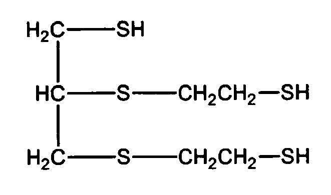

Les composés polyisocyanates utilisables dans la composition selon l'invention peuvent être tous polyisocyanates généralement utilisés pour formuler des polyuréthanes.

On peut citer en particulier des composés aliphatiques tels que ethylène diisocyanate, triméthylène diisocyanate, tétraméthylène diisocyanate, hexaméthylène diisocyanate, octamethylène diisocyanate, nonaméthylène diisocyanate, 2,2'-diméthylpentane diisocyanate, 2,2,4-triméthylhexane diisocyanate, décaméthylène diisocyanate, butène diisocyanate, 1,3-butadiène-1,4-diisocyanate, 2,4,4-triméthylhexaméthylène diisocyanate, 1,6,11-undécane triisocyanate, 1,3,6-héxaméthylène triisocyanate, 1,8-diisocyanato-4-isocyanatométhylotane, 2,5,7-triméthyl-1,8-diisocyanato-5-isocyanatométhyloctane, bis(isocyanatoéthyl)carbonate, bis (isocyanatoéthyl)éther, 1,4-butylèneglycol dipropyléther-ω,ω'-diisocyanate, lysine diisocyanatométhyl ester, lysine triisocyanate, 2-isocyanatoéthyl-,2,6-diisocyanato hexanoate, 2-isocyanatopropyl-2,6-diisocyanato hexanoate, xylylène diisocyanate, bis(isocyanatoéthyl)benzène, bis-(isocyanatopropyl)benzène, a, a, a',a'-tetraméthylxylylène diisocyanate, bis(isocyanatobutyl)benzène, bis-(isocyanatométhyl)napthalène, bis(isocyanatométhyl)-diphényl éther, bis (isocyanatoéthyl)phthalate, mésitylylène triisocyanate et 2,6-di(isocyanatométhyl)furane ; alicyclic polyisocyanates tels que isophorone diisocyanate, bis(isocyanatométhyl)cyclohexane, dicyclohexylméthane diisocyanate, cyclohexane diisocyanate, méthylcyclohexane diisocyanate, dicyclohexyl-diméthylméthane diisocyanate, 2,2'-diméthyldicyclohexylméthane diisocyanate, bis(4-isocyanato-n-butylidène)-pentaerythritol, dimer acid diisocyanate, 2-isocyanatométhyl-3-(3-isocyanatopropyl)-5-isocyanato-méthyl-bicyclo-(2,2,1)-heptane, 2-isocyanatométhyl-2-(3-isocyanatopropyl)-6-isocyanatométhyl-bicyclo-(2,2,1)-heptane, 2-isocyanatométhyl-2-(3-isocyanatopropyl)-5-isocyanatométhyl-bicyclo-(2,2,1)-heptane, 2-isocyanatométhyl-3-(3-isocyanatopropyl)-6-isocyanatométhyl-bicyclo-(2,2,1)-heptane, 2-isocyanatométhyl-3-(3-isocyanatopropyl)-5-(2-isocyanatométhyl)-bicyclo-(2,2,1)-heptane, 2-isocyanatométhyl-3-(3-isocyanatopropyl)-6-(2-isocyanatoéthyl)-bicyclo-(2,2,1)-heptane, 2-isocyanatométhyl-2-(3-isocyanatopropyl)-5-(2-isocyanatoéthyl)-bicyclo-(2,2,1)-heptane et 2-isocyanatométhyl-2-(3-isocyanatopropyl)-6-(2-isocyanatoéthyl)-bicyclo-(2,2,1)-heptane et les composés aromatiques tels que le phénylène diisocyanate, tolylène diisocyanate, éthylphénylène diisocyanate, isopropylphénylène diisocyanate, diméthylphénylène diisocyanate, diéthylphénylène diisocyanate, diisopropylphénylène diisocyanate, triméthylbenzène triisocyanate, benzène triisocyanate, naphthalène diisocyanate, méthylnaphthalène diisocyanate, biphényl diisocyanate, tolidine diisocyanate, 4,4'-diphénylméthane diisocyanate, 3,3'-diméthoxybiphényl-4,4'-diisocyanate, triphénylméthane triisocyanate, MDI polymérique, naphthalène triisocyanate, diphénylméthane-2,4,4'-triisocyante, 3-méthyldiphénylméthane-4,6,4'-triisocyanate, 4-méthyldiphénylméthane-3,5,2',4',6'-pentaisocyanate, phénylisocyanatométhyl isocyanate, phénylisocyanatoéthyl isocyanate, tétrahydronaphthylène diisocyanate, hexahydrobénène diisocyanate, hexahydrodiphénylméthane-4,4'-diisocyanate, diphényl éther diisocyanate, éthylène glycol diphényl éther diisocyanate, 1,3-propylène glycol diphényl éther diisocyanate, benzophénone diisocyanate, diéthylène glycol diphényl éther diisocyanate, dibenzofurane diisocyanate, carbazole diisocyanate, éthylcarbazole diisocyanate et dichlorocarbazole diisocyanate ; sulfure contenant des polyisocyanates aliphatiques tels que thiodiéthyl diisocyanate, thiodipropyl diisocyanate, thiodihéxyl diisocyanate, diméthyl sulfone diisocyanate, dithiodiméthyl diisocyanate, dithiodiéthyl diisocyanate, et dithiodipropyl diisocyanate ; des polyisocyanates aromatiques soufrés tels que diphénylsulfure-2,7'-diisocyanate, diphénylsulfure-4,4'-diisocyanate, 3,3'-diméthoxy-4,4,-diisocyanatodibenzylthioéther, bis(4-isocyanatométhylphényl)sulfure, et 4,4-méthoxyphénylthioéthylèneglycol-3,3'-diisocyanate, diphényidisulfure-4,4'-diisocyanate, 2,2'-diméthyldiphényldisulfure-5,5'-diisocyanate, 3,3'-diméthyldiphénylsulfure-6,6'-diisocyanate, 4,4'-diméthylphényldisulfure-5,5'-diisocyanate, 3,3'-diméthoxydiphényldisulfure-4,4'diisocyanate, et 4,4'-diméthoxydiphényldisulfure-3,3'-diisocyanate; diphénylsulfone-4,4'-diisocyanate, diphénylsulfone-3,3'-diisocyanate, benzi-dinesulfone-4,4'-diisocyanate, diphénylméthanesulfone-4,4'-diisocyanate, 4-méthyldiphénylsulfone-2,4'-diisocyanate, 4,4'-diméhtoxydiphénylsulfone-3,3'diisocyanate, 3,3'-diméthoxy-4,4'-diisocyanatodibenzyl sulfone, 4,4'-diméthyldiphénylsulfone-3,3'diisocyanate, 4,4'-ditert-butyldiphénylsulfone-3,3'-diisocyanate, 4,4'-méthoxyphényléthylènedisulfone-3,3'-diisocya-nate; 4-méthyl-3-isocyanato-phénylsulfonyl-4'-isocyanatophénol ester et 4-méthoxy-3-isocyanatophénylsulfonyl-4'-isocyanatophényl ester ; des polyisocyanates aromatiques contenant un groupe sulfonamide tels que 4-méthyl-3-isocyanatophénylsulfonylanilide-3'-méthyl-4'-isocyanate, diphénylsulfonyl-éthylènediamine-4,4'-diisocyanate, 4,4'-méthoxyphénylsulfonyléthylène-diamine-3,3'-diisocyanate, et 4-méthyl-3-isocyanatophénylsulfonylanilide-4-méthyl-3'-isocyanate des composés hétérocycliques contenant du soufre tels que thiophène-2,5-diisocyanate ; et 1,4-dithian-2,5-diisocyanate.

Un polyisocyanate préféré est le composé de formule C₆H₄(CH₂NCO)₂.

Des compositions polymérisables à base de polythiols et de polyisocyanates utilisables selon l'invention sont décrites notamment dans les brevets US 5 087 758, US 5 191 055 et US 4 775 733.

Les monomères utilisables dans la composition peuvent être également choisis parmi les monomères précurseurs des polythiouréthane-urée.

Des compositions polymérisables conduisant à des substrats à base de polythiouréthane-uréé sont décrites notamment dans la demande internationale WO 03/042270.

Les monomères utilisables dans la composition de l'invention peuvent être aussi choisis parmi les monomères précurseurs des polyépisulfures.

Des compositions polymérisables de monomères épisulfures sont décrites entre autres dans les documents EP 874 016 et EP 0 942 027.

De préférence, les monomères polymérisables ayant au moins une fonctionnalité épisulfure sont des composés ayant une ou plusieurs structures épisulfure représentées par la formule ci-dessous dans une molécule : 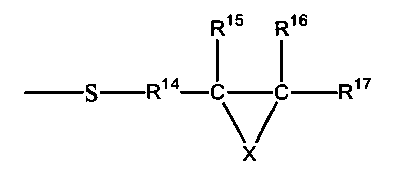 dans laquelle R¹⁴ représente un groupe hydrocarboné ayant 1 à 10 atomes de carbone, R¹⁵, R¹⁶ et R¹⁷ représentent chacun un atome hydrogène ou un groupe hydrocarboné ayant 1 à 10 atomes de carbone, X représente S ou O à la condition que dans la molécule le nombre moyen de S représenté par X soit de préférence d'environ 50% ou plus du nombre total de S et O constituant le cycle à 3 chaînons.

Une classe préférée de monomères épisulfure polymérisables est représentée par les composés de formule : 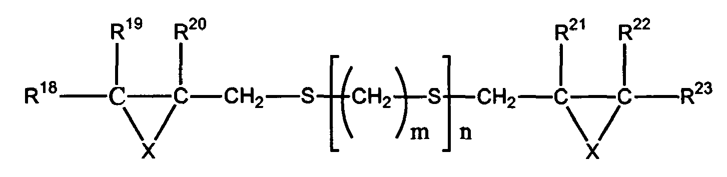 dans laquelle R¹⁸, R¹⁹, R²⁰, R²¹, R²² et R²³ représente chacun un atome d'hydrogène ou un groupe hydrocarboné ayant 1 à 10 atomes de carbone ; X représente S ou O à la condition que dans la molécule le nombre moyen de S représenté par X soit d'environ 50 % ou plus du nombre total de S et O constituant les cycles à 3 chaînons, m représente un entier de 0 à 6 et n représente un entier de 0 à 4.

De préférence, R¹⁴ représente un groupe méthylène ou éthylène et R¹⁵, R¹⁶ et R¹⁷ et R¹⁸, R¹⁹, R²⁰, R²¹, R²² et R²³ représentent de préférence chacun un atome d'hydrogène, un groupe méthyle. De préférence encore, R¹⁴ représente un groupe méthylène et R¹⁵, R¹⁶, R¹⁷, R¹⁸, R¹⁹, R²⁰, R²¹, R²² et R²³ représentent chacun un atome d'hydrogène

Le nombre moyen de S est 50% ou plus, de préférence 90% ou plus, mieux 95% ou plus idéalement 100% du nombre total de S et O constituant les cycles à 3 chaînons.

Des exemples de ces composés incluant des composés organiques linéaires tels que bis(β-épithiopropylthio)méthane, 1,2-bis(β-épithiopropylthio)éthane, 1,3-bis(β-épithiopropylthio)propane, 1,2-bis(β-épithiopropylthio)propane, 1-(β-épithio propylthio)-2-(β-épithiopropylthiométhyl)propane, 1,4-bis(β-épithiopropylthio)butane, 1,3-bis(β-épithiopropylthio)butane, 1-(β-épithiopropylthio)-3-(β-épithiopropylthioméhtyl)butane, 1,5-bis(β-épithiopropylthio)pentane, 1-(β-épithiopropylthio)-4-(β-épithiopropylthiométhyl)pentane, 1,6-bis(β-épithio propylthio)hexane, 1-(β-épithiopropylthio)-5-(β-épithiopropylthiométhyl) hexane, 1-(β-épithiopropylthio)-2-[(2-β-épithiopropylthioéthyl) thio] éthane et 1-(β-épithiopropylthio)-2-[[2-(2-β-épithiopropylthioéthyl)thioéthyl] thio]éthane ; des composés organiques ramifiés tels que tétrakis(β-épithiopropylthiométhyl)méthane, 1,1,1-tris(β-épithiopropylthiométhyl) propane, 1,5-bis(β-épithiopropylthio)-2-(β-épithiopropylthiométhyl)-3-thiapentane, 1,5-bis(β-épithiopropylthio)-2,4-bis(β-épithiopropylthiométhyl)-3-thiapentane, 1-(β-épithiopropylthio)-2,2-bis(β-épithiopropylthiométhyl)-4-thiahexane, 1,5,6-tris(β-épithiopropylthio)-4-(β-épithiopropylthiométhyl)-3-thiahexane, 1,8-bis(β-épithiopropylthio)-4-(β-épithiopropylthiométhyl)-3,6-dithiaoctane, 1,8-bis(β-épithiopropylthio)-4,5-bis(β-épithiopropylthiométhyl)-3,6-dithiaoctane, 1,8-bis(β-épithiopropylthio)-4,4-bis(β-épithiopropylthiométhyl)-3,6-dithiaoctane, 1,8-bis(β-épithiopropylthio)-2,4,5-tris(β-épithiopropylthiométhyl)-3,6-dithiaoctane, 1,8-bis(β-épithiopropylthio)-2,5-bis(β-épithiopropylthiométhyl)-3,6-dithiaoctane, 1,9-bis(β-épithiopropylthio)-5-(β-épithiopropylthiométhyl)-5-[(2-**-**épithiopropylthioéthyl)thiométhyl]-3-7-dithianonane, 1,10 bis (β**-**épithiopropylthio)-5,6-bis[2-β-épithiopropylthioéthyl)thio]-3,6,9-trithiadécane, 1,11-bis(β-épithiopropylthio)-4,8-bis(β-épithiopropylthiométhyl)-3,6,9-trithiaundécane, 1,11-bis(β-épithiopropylthio)-5,7-bis(β-épithiopropylthio méthyl)-3,6,9-trithiaundécane, 1,11-bis(β-épithiopropylthio)-5,7-[(2-β-épithiopropylthio)thiométhyl]-3,6,9-trithiaundécane et 1,11-bis(β-épithiopropylthio)-4,7-bis(β-épithiopropylthiométhyl)-3,6,9-trithiaundécane ; et des composés obtenus par substitution d'au moins un atome d'hydrogène du groupe épisulfure par un groupe méthyl, des composés organiques cycloaliphatiques tels que 1,3- et 1,4-bis(β-épithiopropylthio)cyclohexanes, 1,3-et 1,4-bis(β-épithiopropylthiométhyl)cyclohexanes, bis[4-(β-épithiopropylthio) cyclohexyl]méthane, 2,2-bis[4-(β-épithiopropylthio)cyclohexyl]propane, bis[4-(β-épithiopropylthio)cyclohexyl] sulfure, 2,5-bis(β-épithiopropylthiométhyl)-1,4-dithiane et 2,5-bis(β-épithiopropylthioéthylthiométhyl)-1,4-dithiane ; et les composés obtenus en substituant au moins un atome d'hydrogène du groupe épisulfure par un groupe méthyl.

Un composé épisulfure préféré est le bis(β-épithiopropyl)sulfure de formule :

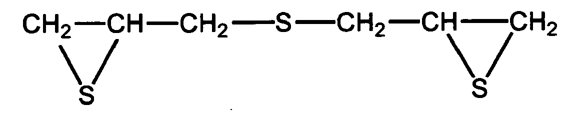

Comme indiqué précédemment, la composition polymérisable est particulièrement efficace lorsque la composition comprend des monomères soufrés.

Cependant, il est également possible d'utiliser le mélange spécifique d'un ou plusieurs agents masquants et d'un ou plusieurs parfums dans la composition selon l'invention lorsque le ou les monomères ne contiennent pas d'atome de soufre. Dans ce cas, la fonction parfumante du parfum a un rôle prépondérant par rapport à l'agent masquant.

Selon ce second mode de réalisation, le ou les monomères utilisables dans la composition selon l'invention sont choisis préférentiellement parmi les monomères précurseurs des polyallyliques, des poly(méth)acrylates, des copolymères styrènes/(méth)acrylates, des copolymères butadiène/(méth)acrylates, des polyuréthanes, des polyuréthanes-urées, des polyépoxydes et des polycarbonates.

Les monomères précurseurs des poly(méth)acrylates utilisables dans la composition selon l'invention peuvent être tous monomères précurseurs des poly(méth)acrylates habituellement utilisés pour la fabrication des lentilles ophtalmiques, et en particulier les monomères di, tri ou tétra(méth)acrylate. De préférence, le monomère est un di(méth)acrylate. Parmi les di(méth)acrylates préférés, on peut citer les alkylèneglycol di(méth)acrylates, de préférence l'éthylèneglycol di(méth)acrylate et le propylèneglycol di(méth)acrylate, les polyalkylèneglycol di(méth)acrylates, de préférence les polyéthylèneglycol di(méth)acrylates et les polybutylèneglycol di(méth)acrylates, le néopentylglycol di(méth)acrylate, et les dérivés des bisphénol-A di(méth)acrylates.

Parmi les monomères précurseurs des copolymères butadiène/(méth)acrylates, on peut citer les monomères précurseurs des poly(méthylméthacrylate-butadiène), des poly(éthylméthacrylate-butadiène), des poly(propylméthacrylate-butadiène), des poly(butylméthacrylate-butadiène), des poly(méthylacrylate-butadiène), des poly(éthylacrylate-butadiène), des poly(propylacrylate-butadiène), et des poly(butylacrylate-butadiène).

Comme expliqué précédemment, la composition comprend au moins un agent masquant choisi parmi les éthers cycliques.

De préférence, le ou les agents masquants sont choisis parmi les éthers polycycliques, mieux les éthers bicycliques.

Un agent masquant particulièrement préféré est le 1,8 cinéole (encore appelé Eucalyptol) de formule :

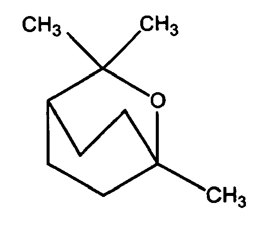

A titre d'agent masquant, on peut encore citer le 1,4-cinéole de formule :

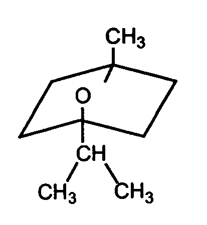

Le ou les agents masquants représentent préférentiellement de 0,1 à 3, mieux de 0,5 à 1,5, et mieux encore de 0,8 à 1, parties en poids pour cent parties en poids de monomères polymérisables.

Outre les agents masquants, la composition selon l'invention comprend au moins un parfum choisi parmi les muscs naturels ou synthétiques et préférentiellement des muscs synthétiques tels que les muscs monocycliques, polycycliques ou macrocycliques.

Comme exemple de musc monocyclique, on peut citer :

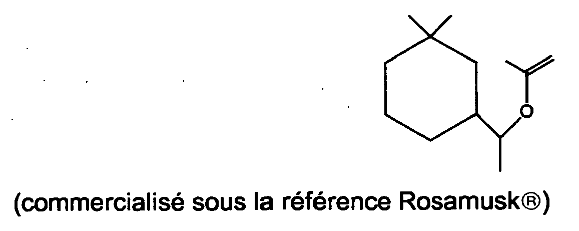

Les muscs polycycliques qui sont les muscs préférés pour l'invention peuvent être choisis parmi les composés de formules :

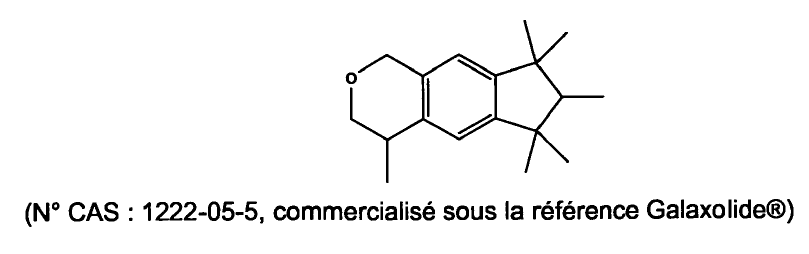

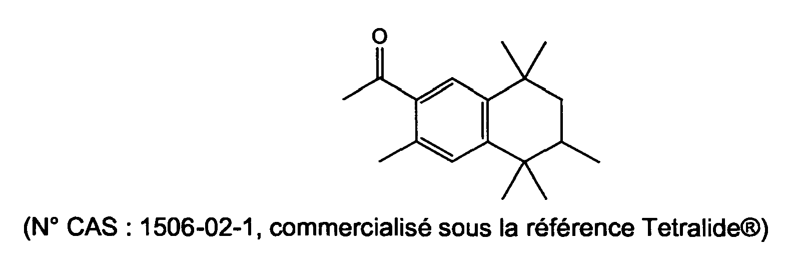

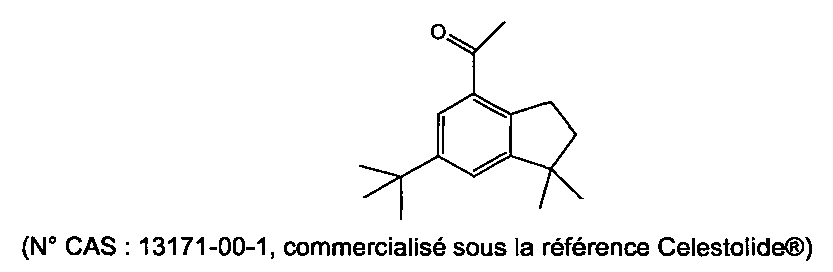

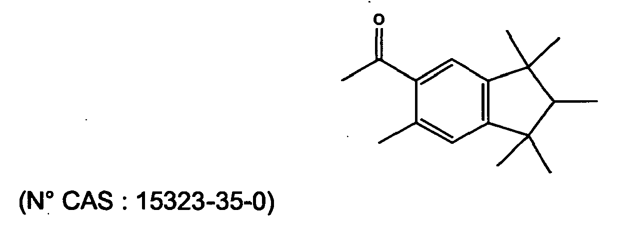

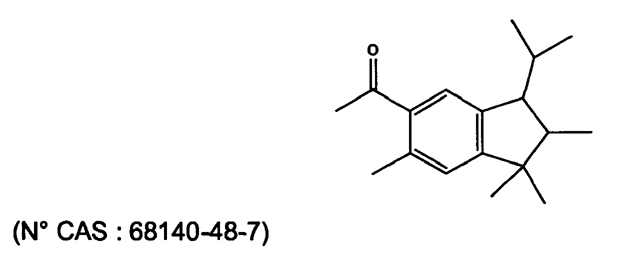

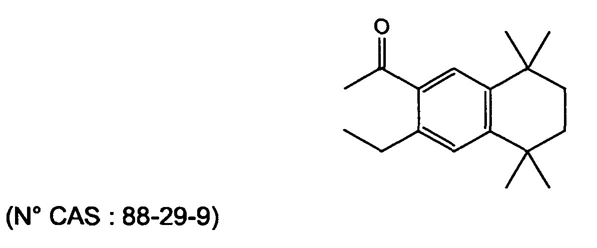

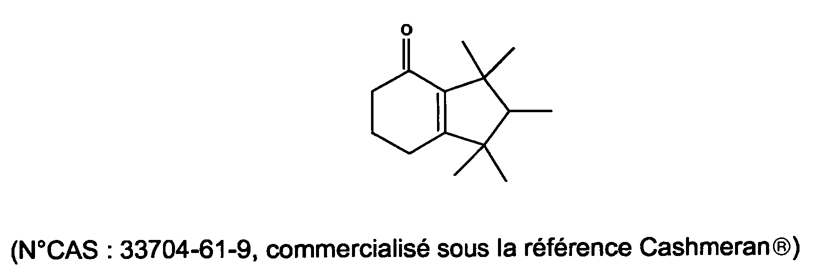

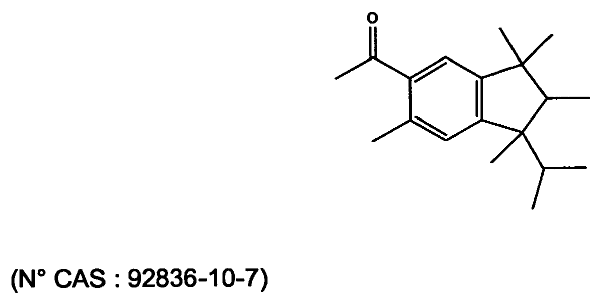

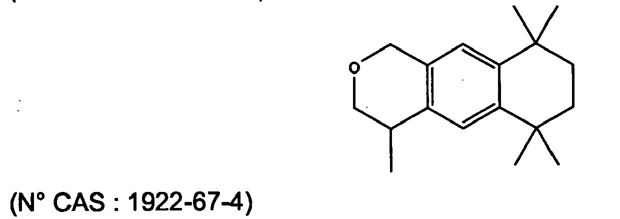

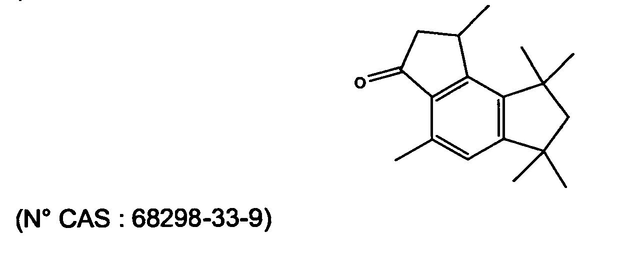

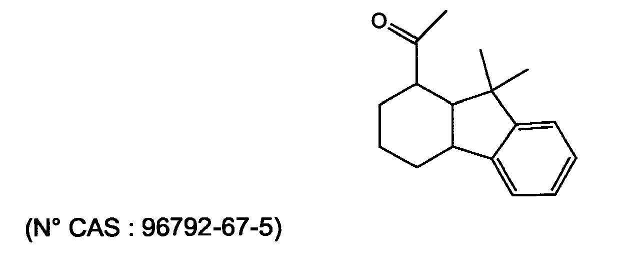

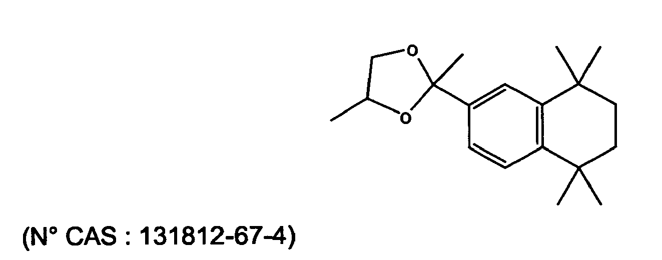

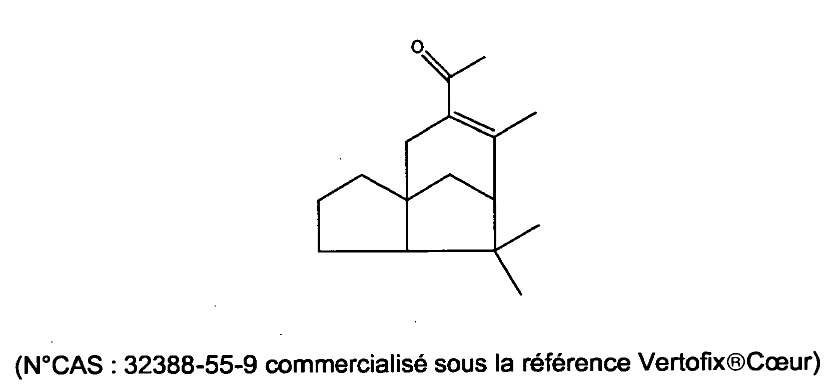

Les muscs macrocycliques peuvent être choisis parmi les composés de formules :

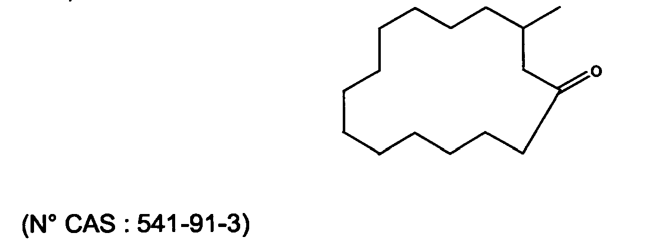

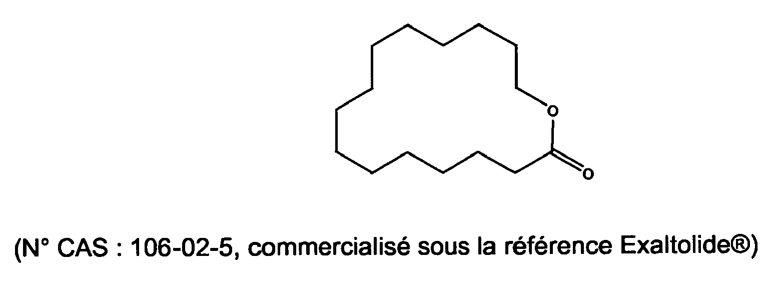

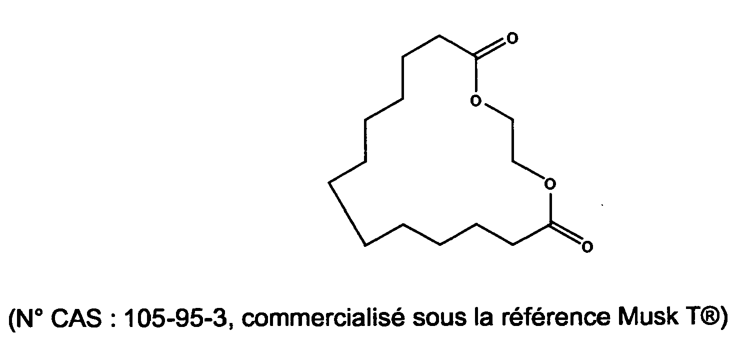

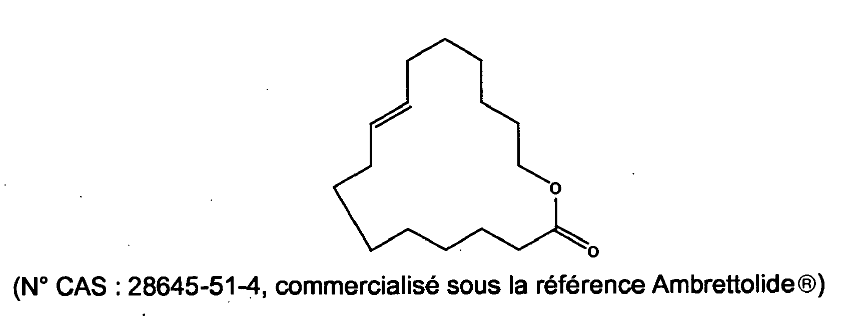

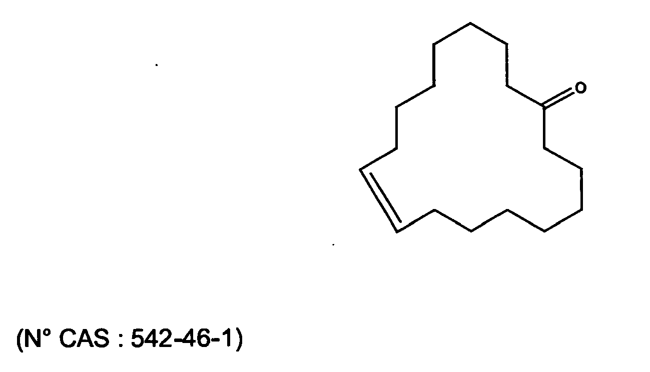

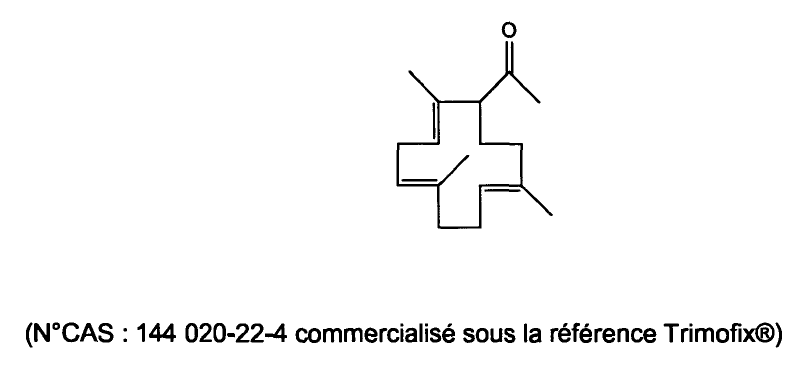

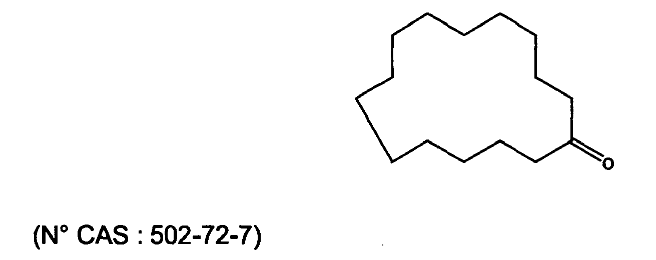

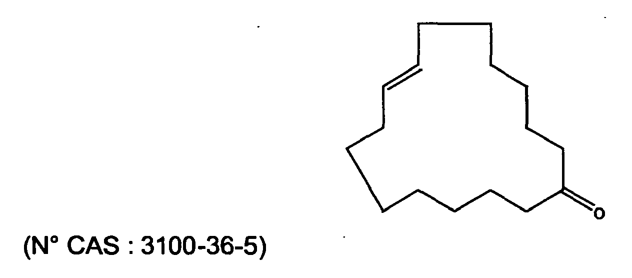

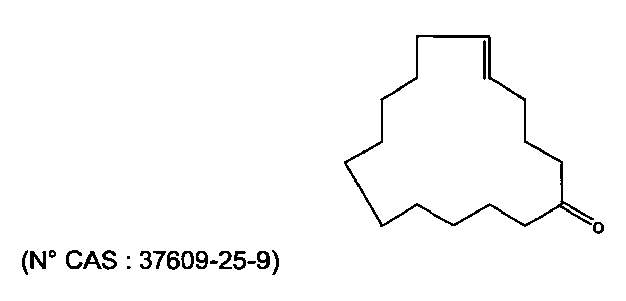

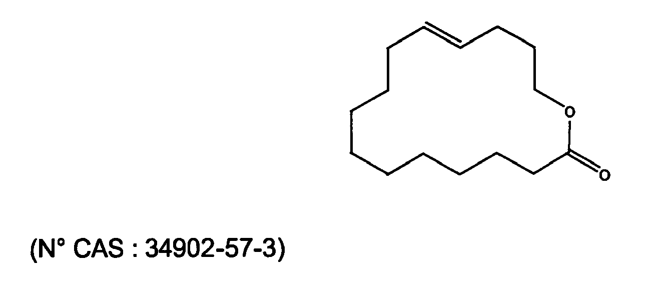

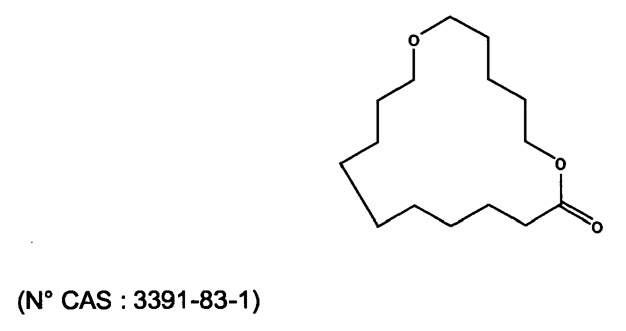

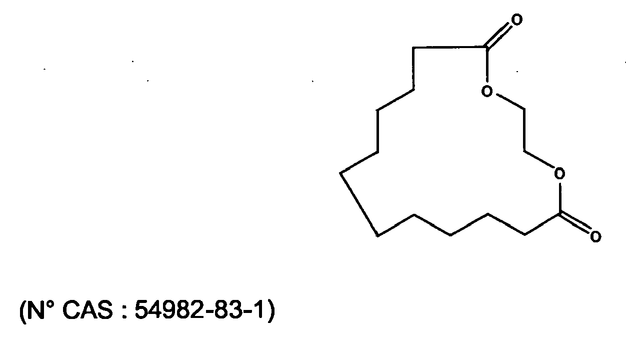

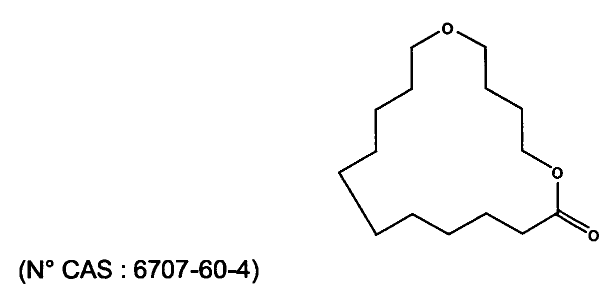

Avantageusement, le ou les parfums représentent de 0,02 à 3 de préférence de 0,1 à 3, mieux de 0,2 à 1,5 et mieux encore de 0,3 à 1, parties en poids pour cent parties en poids de monomères polymérisables.

Selon un autre mode de réalisation de l'invention, la composition selon l'invention comprend en outre au moins un dérivé aldéhydique.

Le ou les dérivés aldéhydiques sont généralement choisis parmi les dérivés aldéhydiques insaturés en C₄-C₁₄. On peut citer en particulier le cis-4-décénal et le cis-4-hepténal.

Avantageusement, le ou les dérivés aldéhydiques représentent de 5 x10⁻³ à 1, de préférence de 0,02 à 0,5 et mieux encore de 0,02 à 0,1 parties en poids pour cent parties en poids de monomères polymérisables.

Selon un autre mode de réalisation de l'invention, la composition selon l'invention comprend en outre un composé additionnel P, ledit composé additionnel P étant un parfum ou un mélange de parfum, différent(s) des parfums définis précédemment, et choisi(s) parmi les terpènes, les esters aliphatiques ou aromatiques, les composés bicycliques non aromatiques comportant au moins une double liaison intracyclique, ou leurs mélanges.

Le composé additionnel P comprend de préférence 60 à 90 % en poids de terpène, de 2 à 15 % en poids d'ester aliphatique ou aromatique, et de 2 à 10 % en poids de composé bicyclique non aromatique comportant au moins une double liaison intracyclique.

De préférence, les terpènes sont des limonènes, mieux un R(+) limonène.

Les esters aliphatiques ou aromatiques peuvent être choisis parmi l'éthylméthylphénylglycidate, l'hexanoate d'éthyle et leurs mélanges.

Un composé bicyclique non aromatique comportant au moins une double liaison intracyclique est par exemple le caryophyllène.

Généralement, le composé additionnel P représente de 0,05 à 1, mieux de 0,1 à 0,5 parties en poids pour 100 parties en poids de monomères polymérisables.

Un composé additionnel P préféré est le Plastodor®, qui comprend les composés suivants (en poids) :

| | |
|---|---|
| 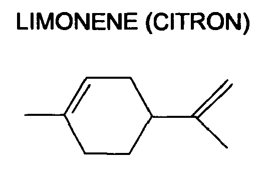 | 80% |
| 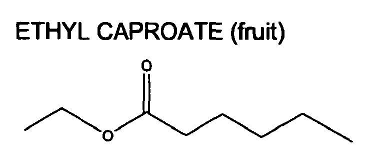 | 7% |
| 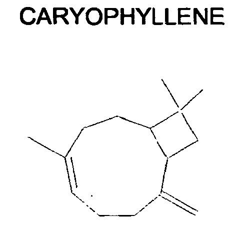 | 4,5% |
| 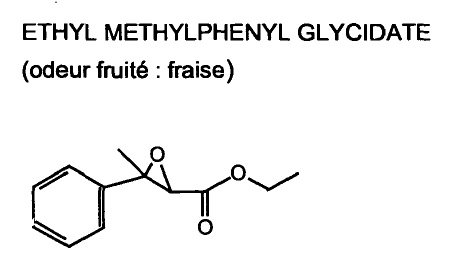 | 5,2% |

Lorsque la composition selon l'invention ne comporte pas de dérivé aldéhydique ni de composé additionnel P, le ou les agents masquants et le ou les parfums représentent ensemble de préférence au moins 1,5 parties en poids pour cent parties en poids de monomères polymérisables.

Lorsque la composition selon l'invention comporte un ou plusieurs dérivés aldéhydiques et/ou un composé additionnel P, le ou les agents masquants et le ou les parfums représentent ensemble de préférence au moins 1,1 parties en poids pour cent parties en poids de monomères polymérisables.

Les compositions polymérisables selon l'invention peuvent également comporter des additifs classiquement utilisés dans les compositions polymérisables pour le moulage d'articles d'optiques, en particulier de verres de lunette, dans des proportions classiques, à savoir des inhibiteurs, des colorants, des absorbeurs UV, des antioxydants et des absorbants anti-jaunissement.

Comme exemples préférentiels d'agents antioxydants, on peut citer la triphénylphosphine (TPP) et l'Irganox® 1010 (pentaérythritol - tétrakis [3(3,5-di-tert-butyl-4-hydroxyphényl)proprionate] (CG1010).

La composition selon l'invention peut comprendre un ou plusieurs amorceurs de polymérisation. Pour des systèmes polymérisables par polycondensation, on utilise préférentiellement des catalyseurs à base d'étain tel que le dibutyldilaurate d'étain. Lorsque la composition est polymérisable par voie radicalaire, on utilise de préférence des photoamorceurs ou des mélanges de photoamorceurs et d'amorceurs thermiques, en proportion de 0,001 à 5% en poids par rapport au poids total des monomères polymérisables contenus dans la composition.

Parmi les photoamorceurs utilisables dans les compositions polymérisables selon l'invention, on peut citer en particulier, l'oxyde de 2,4,6-triméthylbenzoyldiphénylphosphine (TPO), la 1-hydroxycyclohéxylphényl-cétone, la 2,2-diméthoxy-1,2-diphényléthane 1-one, les alkylbenzoyléthers, le photoamorceur commercialisé par la Société CIBA-GEIGY sous la dénomination CGI 1700, qui est un mélange 25/75 d'un composé de formule 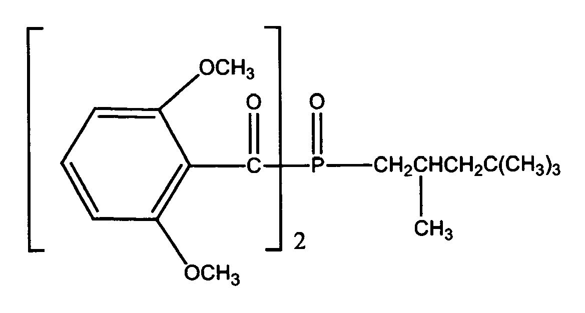 et d'un composé de formule : 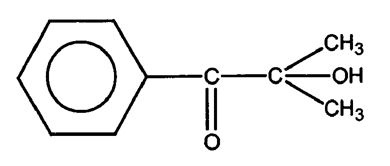 et le photoamorceur CGI 1850 commercialisé par la société CIBA GEIGY qui est un mélange (50/50) (en poids) de composé A et d'Irgacure ® 184 de formule :

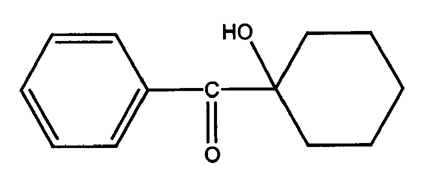

Comme indiqué précédemment, les compositions polymérisables préférées selon l'invention sont des compositions photopolymérisables comportant un ou plusieurs photoamorceurs.

De préférence encore, les compositions polymérisables selon l'invention sont des compositions photo- et thermopolymérisables comprenant à la fois un photoamorceur de polymérisation et un amorceur thermique de polymérisation.

Les amorceurs de polymérisation thermique sont des composés bien connus dans la technique et on peut citer parmi ceux-ci les péroxydes tels que le péroxyde de benzoyle, le péroxydicarbonate de cyclohexyle, le péroxydicarbonate d'isopropyle et le t.-butylpéroxy(2-éthyl hexanoate).

L'invention a encore pour objet une lentille optique obtenue par polymérisation de la composition telle que définie précédemment.

En particulier, la lentille optique peut être une lentille ophtalmique, mieux un verre de lunette.

L'invention a enfin pour objet un procédé de préparation d'un substrat à base de polythiouréthane comprenant les étapes suivantes :
- préparation d'un premier mélange comprenant au moins un monomère polythiol, au moins un agent masquant choisi parmi les éthers cycliques et au moins un parfum choisi parmi les muscs polycycliques ou macrocycliques,
- mélange, de préférence à froid, d'au moins un monomère polyisocyanate avec ledit premier mélange, pour former un mélange principal,
- polymérisation dudit mélange principal.

Par mélange à froid, on entend un mélange effectué à une température inférieure à 15°C, de préférence de l'ordre de 10°C, afin d'éviter la polymérisation.

De préférence, le monomère polyisocyanate est au préalable mélangé avec au moins un catalyseur.

En alternative, on peut mélanger le ou lesdits monomère polythiols, le ou lesdits monomères polyisocyanates, puis ajouter au moins un agent masquant choisi parmi les éthers cycliques et au moins un parfum choisi parmi les muscs polycycliques ou macrocycliques.

Le ou les catalyseurs peuvent être choisis parmi les catalyseurs généralement utilisés pour polymériser les monomères.

On peut citer en particulier le dibutyl dichlorure d'étain, le diméthyl dichlorure d'étain et le dibutyl dilaurate d'étain.

### Exemple

Le but du présent exemple est de préparer différents verres parfumés à base de polythiouréthane, de mesurer leur aptitude au masquage et d'apprécier l'odeur masquante.

Les verres sont préparés selon le procédé suivant :
1) préparation du composé X (monomère polyisocyanate)
   Le composé X utilisé est le composé de formule C₆H₄(CH₂NCO)₂.
   On mélange 52 parties en poids du composé X et 0,01 partie en poids de dibutyl dichlorure d'étain de formule n(C₄H₉)₂Sn(Cl)₂. Le mélange est effectué à froid à 10°C pendant 30 minutes à l'aide d'un barreau aimanté.
2) préparation du composé Y (monomère polythiol)
   Le composé Y utilisé est le composé de formule :

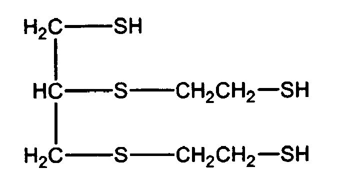

On mélange selon les cas le composé Y (en une quantité égale à 48 parties en poids) avec l'un des composés ou mélanges suivants :
- éther cyclique (exemple comparatif)
- Plastodor® (exemple comparatif)
- musc (exemple comparatif)
- éther cyclique et musc (selon l'invention)
- éther cyclique, musc et dérivé aldéhydique (selon l'invention)
- éther cyclique, musc et Plastodor® (selon l'invention)
- éther cyclique, musc, dérivé aldéhydrique et Plastodor® (selon l'invention).

L'ensemble est agité à l'aide d'un barreau aimanté pendant environ 30 minutes à une température basse de l'ordre de 10°C.

Les monomères X et Y sont mélangés entre eux pendant 60 minutes dans un préparateur en double enveloppe d'une capacité de 5 kg et muni d'une pompe à vide primaire pour le dégazage. Le mélange est effectué à une température égale à 10°C.

La formulation est ensuite dégazée sans agitation pendant 30 minutes.

Le vide est ensuite cassé à l'aide de diazote asséché.

Le mélange ainsi formulé est injecté à travers un filtre de porosité 1,2 µm dans les assemblages de moules prévus à cet effet afin d'obtenir un verre optique transparent.

Chaque assemblage est constitué de 2 moules en verre minéral formant entre eux une cavité de moulage et maintenus à leurs périphéries par un ruban adhésif ou par un joint.

### Résultats :

Pour chaque formulation testée, on apprécie l'odeur dégagée lors d'une opération de détourage.

Le détourage est un détourage standard sur Kappa, avec eau de refroidissement, d'une durée moyenne de 30 secondes. L'appréciation de l'odeur se fait par 2 à 5 personnes situées à moins de 1 mètre de la Kappa.

Les résultats sont appréciés selon les critères suivants :

| 1) | Perception de l'odeur soufrée résiduelle | Classification |
|---|---|---|
| | (Aptitude au masquage) | |
| | | |
| - | l'odeur soufrée est forte (quasi identique à l'odeur dégagée lors du détourage du verre ne comportant pas d'agent masquant ni de parfum) | ++ |
| - | l'odeur soufrée est moyenne la diminution de l'odeur de soufre apparaît nettement | + |
| - | l'odeur soufrée n'est pratiquement pas ou très peu identifiable | 0 |
| | | |

| 2) | Perception du parfum - Intensité Olfactive de l'odeur résultante | |
|---|---|---|
| | | |
| - | parfum non perçu (ou très faible odeur du parfum) | 0 |
| - | odeur du parfum perçue suffisante et odeur agréable | OK |
| - | odeur du parfum trop forte et/ou odeur désagréable | + |

Le résultat final est satisfaisant (OK) lorsque l'odeur soufrée n'est pratiquement pas ou très peu identifiable et que l'odeur du parfum perçue est suffisante et agréable.

Le résultat final n'est pas satisfaisant (non OK) dans les autres cas.

Dans le tableau 1, des formulations (exemples comparatifs) contenant un seul additif (éther cyclique, musc ou Plastodor®) ont été testées.

**Tableau 1**

| Additif | N° CAS | Parties en poids | Perception de l'odeur soufrée résiduelle | Perception de l'odeur résultante (parfum) | Résultat |
|---|---|---|---|---|---|
| 1,8-cinéole | 470-82-6 | 1,6 | + | OK | NON OK |
| Galaxolide® | 1222-05-5 | 1,6 | + | OK | NON OK |
| Celestolide® | 13171-00-1 | 1,0 | + | OK | NON OK |
| Tetralide® | 1506-02-1 | 1,0 | + | OK | NON OK |
| Musk T® | 105-95-3 | 1,0 | + | OK | NON OK |
| Plastodor®FRD492 | | 1,0 | + | OK | NON OK |

Dans le tableau 2, sont testées des formulations selon l'invention contenant deux additifs.

**Tableau 2**

| N° | Additif A | Additif B | Parties en poids de A | Parties en poids de B | Perception de l'odeur soufrée résiduelle | Perception de l'odeur résultante | Résultat final |
|---|---|---|---|---|---|---|---|
| 1 | 1,8-cinéole | Galaxolide® | 0,8 | 0,8 | 0 | OK | OK |
| 2 | 1,8-cinéole | Galaxolide® | 0,8 | 1,0 | 0 | OK | OK |
| 3 | 1,8-cinéole | Galaxolide® | 1,0 | 1,0 | 0 | OK | OK |
| 4 | 1,8-cinéole | Musk T® | 0,8 | 0,8 | 0 | OK | OK |
| 5 | 1,8-cinéole | Musk T® | 0,8 | 1,0 | 0 | OK | OK |

Dans le tableau 3, sont testées des formulations contenant trois additifs.

**Tableau 3**

| Additifs | | | | | | | | | |
|---|---|---|---|---|---|---|---|---|---|
| N° | A | B | C | Parties en poids de A | Parties en poids de B | Parties en poids de C | Perception de l'odeur soufrée résiduelle | Perception de l'odeur résultante | Résultat final |
| 6 | 1,8-cinéole | Galaxolide ® | Plastodor®FRD 492 | 0,8 | 0,5 | 0,3 | 0 | OK | OK |
| 7 | 1,8-cinéole | Galaxolide ® | Cis-4-heptenal | 0,8 | 0,5 | 0,05 | 0 | OK | OK |
| 8 | 1,8-cinéole | Galaxolide ® | Cis-4-heptenal | 0,8 | 0,5 | 0,02 | 0 | OK | OK |
| 9 | 1,8-cinéole | Galaxolide ® | Cis-4-heptenal | 0,8 | 0,3 | 0,02 | 0 | OK | OK |

Dans le Tableau 4, sont testées des formulations contenant quatre additifs.

**Tableau 4**

| Additifs | | | | | | | | | | | |
|---|---|---|---|---|---|---|---|---|---|---|---|
| N° | A | B | C | D | Parties en poids de A | Parties en poids de B | Parties en poids de C | Parties en poids de D | Perception de l'odeur soufrée résiduelle | Perception de l'odeur résultante | Résultat final |
| 10 | 1,8-cinéole | Galaxolide® | Plastodor® FRD492 | Cis-4-heptenal | 0,8 | 0,5 | 0,3 | 0,02 | 0 | OK | OK |

## Revendications

1. Composition polymérisable comprenant un ou plusieurs monomères polymérisables, **caractérisée en ce qu'**elle comprend au moins un agent masquant choisi parmi les éthers cycliques et au moins un parfum choisi parmi les muscs naturels et leurs extraits, les muscs synthétiques, et leurs mélanges.

2. Composition selon la revendication 1, **caractérisé en ce qu'**elle comprend un ou plusieurs amorceurs de polymérisation.

3. Composition selon la revendication 1 ou 2, **caractérisée en ce qu'**elle comprend au moins un monomère choisi parmi les monomères contenant au moins un atome de soufre.

4. Composition selon la revendication 3 **caractérisée en ce que** les monomères contenant au moins un atome de soufre sont choisis parmi les monomères précurseurs des polythio(méth)acrylates, des polythiouréthanes, des polythiouréthane-urée et des polyépisulfures.

5. Composition selon la revendication 4 **caractérisée en ce que** la composition comprend au moins un monomère polythiol et au moins un monomère polyisocyanate.

6. Composition selon la revendication 5 **caractérisée en ce que** le polythiol est de formule : 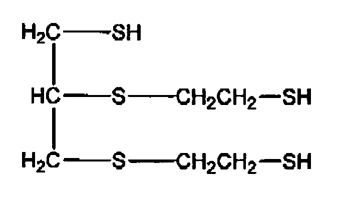 et le polyisocyanate est le composé de formule C₆H₄(CH₂NCO)₂.

7. Composition selon la revendication 1 ou 2, **caractérisée en ce que** le ou les monomères sont choisis parmi les monomères précurseurs des polyallyliques, des poly(méth)acrylates, des copolymères styrènes/(méth)acrylates, des copolymères butadiène/(méth)acrylates, des polyuréthanes, des polyuréthanes-urées, des polyépoxydes et des polycarbonates.

8. Composition selon l'une quelconque des revendications précédentes, **caractérisée en ce que** le ou les agents masquants sont choisis parmi les éthers polycycliques, de préférence les éthers bicycliques.

9. Composition selon la revendication 8, **caractérisée en ce que** l'agent masquant est choisi parmi le 1,8 cinéole et le 1,4-cinéole.

10. Composition selon l'une quelconque des revendications précédentes **caractérisée en ce que** les muscs synthétiques sont des muscs monocycliques, polycycliques ou macrocycliques.

11. Composition selon la revendication 10, **caractérisée en ce que** les muscs polycycliques sont choisis parmi les composés de formules suivantes :

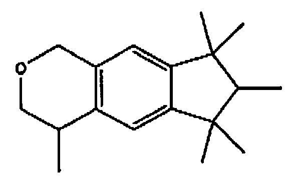

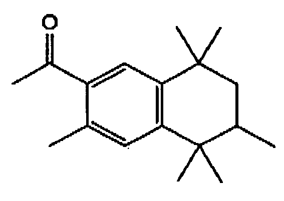

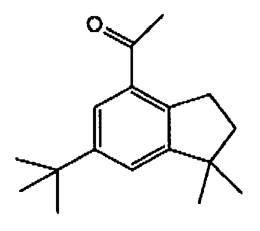

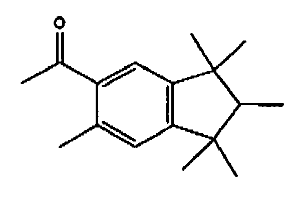

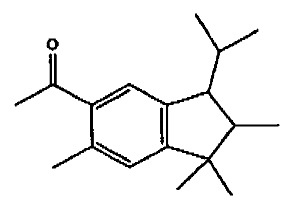

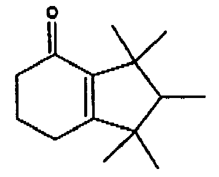

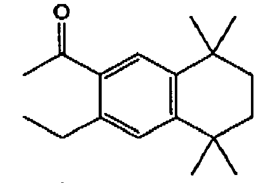

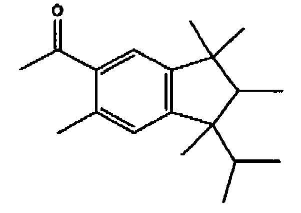

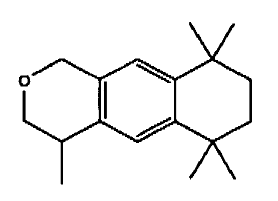

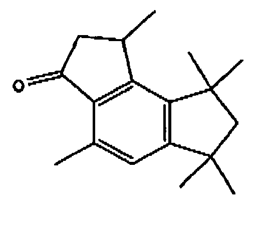

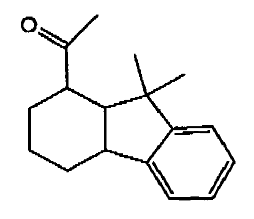

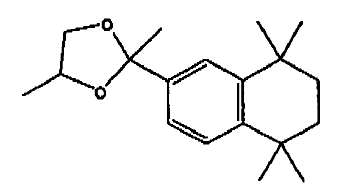

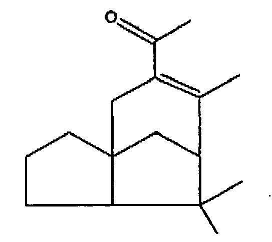

12. Composition selon la revendication 10, **caractérisée en ce que** les muscs macrocycliques sont choisis parmi les composés de formules suivantes :

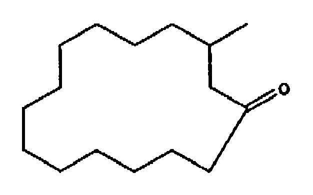

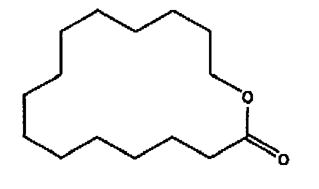

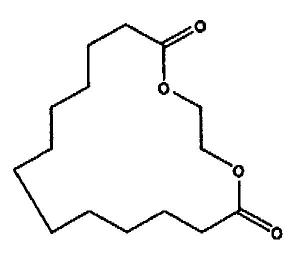

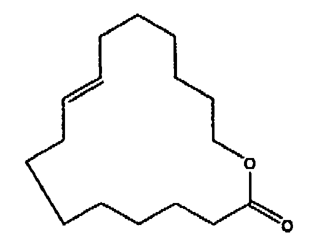

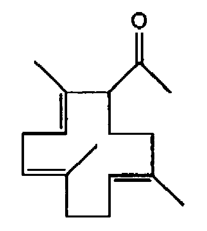

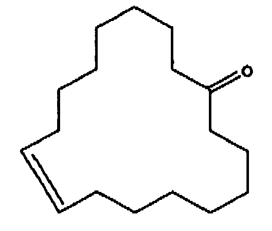

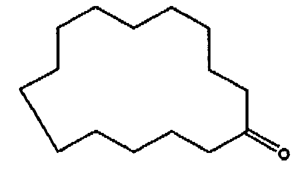

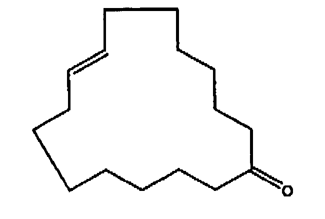

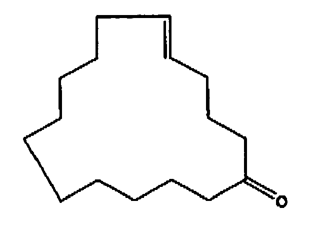

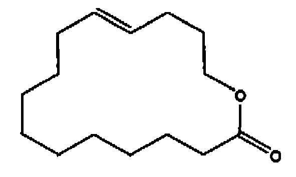

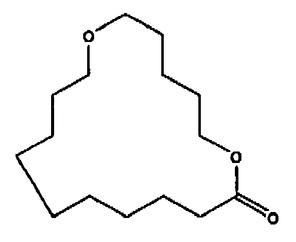

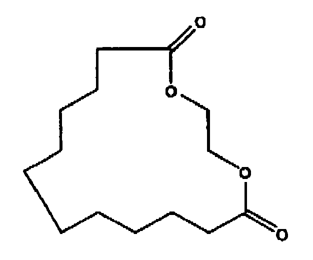

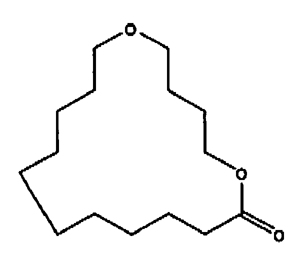

13. Composition selon l'une quelconque des revendications précédentes **caractérisée en ce que** le ou les agents masquants représentent de 0,1 à 3, de préférence de 0,5 à 1,5 et mieux de 0,8 à 1, parties en poids pour cent parties en poids de monomères polymérisables.

14. Composition selon l'une quelconque des revendications précédentes **caractérisée en ce que** le ou les parfums représentent de 0,02 à 3, de préférence de 0,1 à 3, mieux de 0,2 à 1,5, et mieux encore de 0,3 à 1, parties en poids pour cent parties en poids de monomères polymérisables.

15. Composition selon l'une quelconque des revendications précédentes, **caractérisée en ce qu'**elle comprend en outre au moins un dérivé aldéhydique.

16. Composition selon la revendication 15 **caractérisée en ce que** le ou les dérivés aldéhydiques sont choisis parmi les dérivés aldéhydiques insaturés en C₄-C₁₄.

17. Composition selon la revendication 16 **caractérisée en ce que** le ou les dérivés aldéhydiques sont choisis parmi le cis-4-décénal et le cis-4-hepténal.

18. Composition selon l'une quelconque des revendications 15 à 17, **caractérisée en ce que** le ou les dérivés aldéhydiques représentent de 0,005 à 1, de préférence de 0,02 à 0,5 et mieux de 0,02 à 0,1 parties en poids pour cent parties en poids de monomères polymérisables.

19. Composition selon l'une quelconque des revendications précédentes, **caractérisée en ce qu'**elle comprend un composé additionnel P, ledit composé additionnel P étant un parfum ou un mélange de parfums, différent(s) des parfums définis aux revendications précédentes, et choisi(s) parmi les terpènes, les esters aliphatiques ou aromatiques, les composés bicycliques non aromatiques comportant au moins une double liaison intracyclique, ou leurs mélanges.

20. Composition selon la revendication 19, **caractérisée en ce que** le composé additionnel P comprend de 60 à 90 % en poids de terpène, de 2 à 15 % en poids d'ester aliphatique ou aromatique, et de 2 à 10 % en poids de composé bicyclique non aromatique comportant au moins une double liaison intracyclique.

21. Composition selon la revendication 20 **caractérisée en ce que** les terpènes sont des limonènes, de préférence un R(+) limonène.

22. Composition selon l'une quelconque des revendications 19 à 21 **caractérisée en ce que** les esters aliphatiques ou aromatiques sont choisis parmi l'éthylméthylphénylglycidate, l'hexanoate d'éthyle et leurs mélanges.

23. Composition selon l'une quelconque des revendications 19 à 22 **caractérisée en ce que** le composé bicyclique non aromatique comportant au moins une double liaison intracyclique est le caryophyllène.

24. Composition selon l'une quelconque des revendication 19 à 23 **caractérisée en ce que** le composé additionnel P représente de 0,05 à 1, mieux de 0,1 à 0,5 parties en poids pour 100 parties en poids de monomères polymérisables.

25. Composition selon la revendication 13 ou 14 **caractérisée en ce que** le ou les agents masquants et le ou les parfums représentent ensemble au moins 1,5 parties en poids pour cent parties en poids de monomères polymérisables.

26. Composition selon l'une quelconque des revendications 15 à 18 **caractérisée en ce que** le ou les agents masquants et le ou les parfums représentent ensemble au moins 1,1 parties en poids pour cent parties en poids de monomères polymérisables.

27. Lentille optique obtenue par polymérisation d'une composition selon l'une quelconque des revendications précédentes.

28. Lentille optique selon la revendication 27 **caractérisée en ce que** la lentille est une lentille ophtalmique.

29. Lentille optique selon la revendication 28 **caractérisée en ce que** la lentille est un verre de lunette.

30. Procédé de préparation d'un substrat à base de polythiouréthane, comprenant les étapes suivantes :
- préparation d'un premier mélange comprenant au moins un monomère polythiol, au moins un agent masquant choisi parmi les éthers cycliques et au moins un parfum choisi parmi les muscs polycycliques ou macrocycliques,
- mélange, de préférence à froid, d'au moins un monomère polyisocyanate avec ledit premier mélange, pour former un mélange principal,
- polymérisation dudit mélange principal.

## Claims

1. A polymerizable composition comprising one or more polymerizable monomers, **characterized in that** it comprises at least one masking agent selected amongst cyclic ethers and at least one perfume selected amongst naturally occurring musks and extracts thereof, synthetic musks, and mixtures thereof.

2. A composition according to claim 1, **characterized in that** it comprises one or more polymerization initiators.

3. A composition according to claim 1 or 2, **characterized in that** it comprises at least one monomer selected amongst monomers containing at least one sulphur atom.

4. A composition according to claim 3, **characterized in that** the monomers containing at least one sulphur atom are selected amongst precursor monomers of polythio(meth)acrylates, polythiourethanes, polythiourethanes-ureas and polyepisulfides.

5. A composition according to claim 4, **characterized in that** the composition comprises at least one polythiol monomer and at least one polyisocyanate monomer.

6. A composition according to claim 5, **characterized in that** the polythiol has the formula: 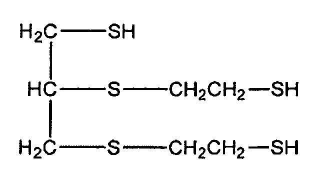 and the polyisocyanate is the compound of the formula C₆H₄(CH₂NCO)₂.

7. A composition according to claim 1 or 2, **characterized in that** the monomers are selected amongst precursor monomers of polyallyl compounds, poly(meth)acrylates, styrene/(meth)acrylate copolymers, butadienel(meth)acrylate copolymers, polyurethanes, polyurethanes-ureas, polyepoxydes and polycarbonates.

8. A composition according to any one of the preceding claims, **characterized in that** the masking agent(s) is/are selected amongst polycyclic ethers, preferably bicyclic ethers.

9. A composition according to claim 8, **characterized in that** the masking agent is selected amongst 1,8-cineole and 1,4-cineole.

10. A composition according to any of preceding claims, **characterized in that** the synthetic musks are monocyclic, polycyclic or macrocyclic musks.

11. A composition according to claim 10, **characterized in that** the polycyclic musks are selected amongst compounds of the following formulae:

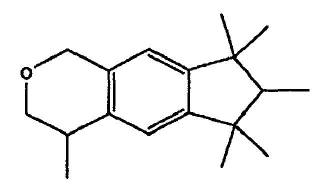

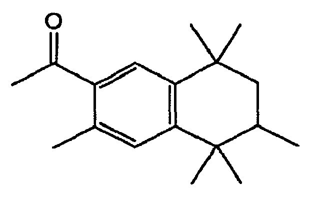

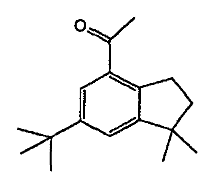

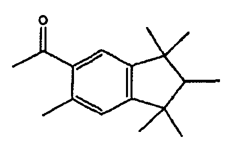

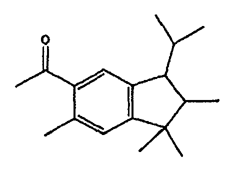

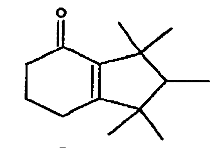

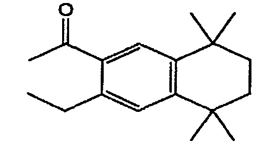

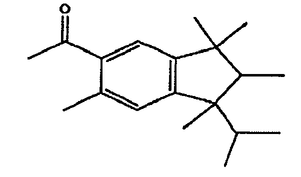

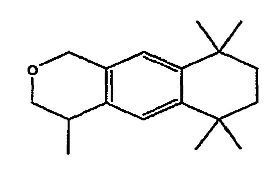

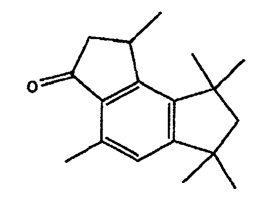

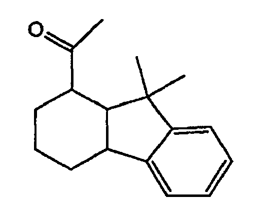

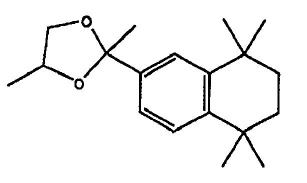

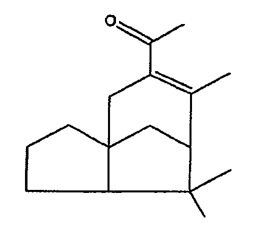

12. A composition according to claim 10, **characterized in that** the macrocyclic musks are selected amongst compounds of the following formulae:

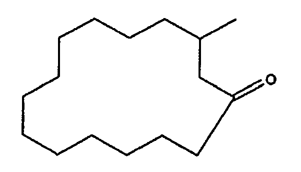

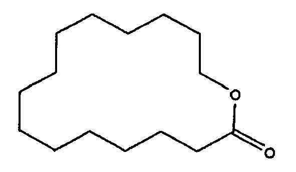

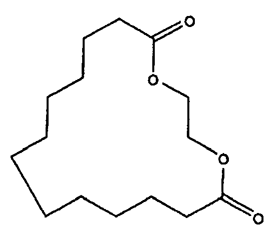

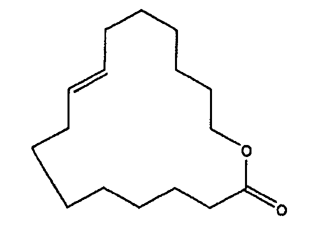

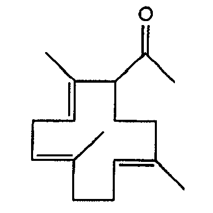

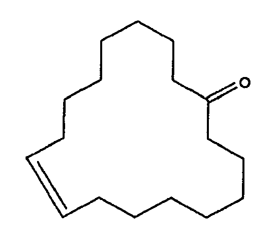

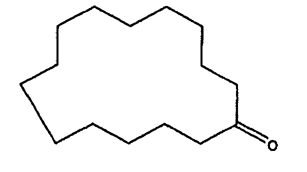

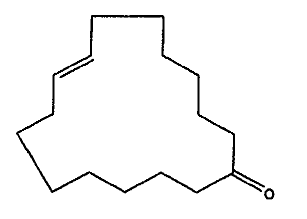

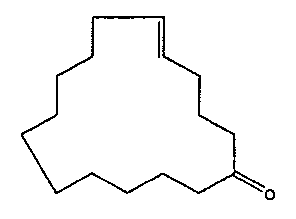

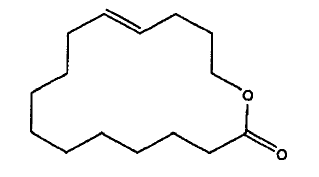

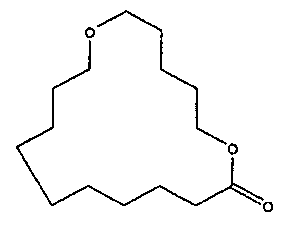

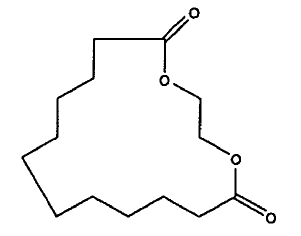

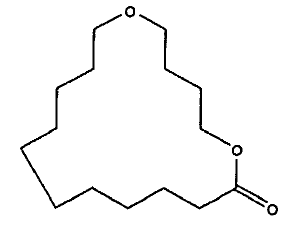

13. A composition according to any one of the preceding claims, **characterized in that** the masking agent(s) represent(s) 0.1 to 3, preferably 0.5 to 1.5, and more preferably 0.8 to 1 parts by weight for one hundred parts by weight of polymerizable monomers.

14. A composition according to any one of the preceding claims, **characterized in that** the perfume(s) represent(s) from 0.02 to 3, preferably from 0.1 to 3, more preferably, from 0.2 to 1.5 and most preferably from 0.3 to 1 parts by weight for one hundred parts by weight of polymerizable monomers.

15. A composition according to any one of the preceding claims, **characterized in that** it further comprises at least one aldehyde derivative.

16. A composition according to claim 15, **characterized in that** the aldehyde derivative(s) is/are selected amongst unsaturated C₄-C₁₄ aldehyde derivatives.

17. A composition according to claim 16, **characterized in that** the aldehyde derivative(s) is/are selected amongst cis-4-decenal and cis-4-heptenal.

18. A composition according to any of claims 15 to 17, **characterized in that** the aldehyde derivative(s) represent(s) 0.005 to 1, preferably 0.02 to 0.5 and more preferably 0.02 to 0.1 parts by weight for one hundred parts by weight of polymerizable monomers.

19. A composition according to any one of the preceding claims, **characterized in that** it comprises an additional compound P, said additional compound P being a perfume or a mixture of perfumes, different from the perfumes as defined in the preceding claims, and selected amongst terpenes, aliphatic or aromatic esters, non aromatic bicyclic compounds bearing at least one intracyclic double bond, or mixtures thereof.

20. A composition according to claim 19, **characterized in that** the additional compound P comprises from 60 to 90% by weight of terpene, from 2 to 15% by weight of aliphatic or aromatic ester and from 2 to 10% by weight of a non aromatic bicyclic compound bearing at least one intracyclic double bond.

21. A composition according to claim 20, **characterized in that** terpenes are limonenes, preferably R(+) limonenes.

22. A composition according to any of claims 19 to 21, **characterized in that** the aliphatic or aromatic esters are selected amongst ethyl methylphenyl glycidate, ethyl hexanoate and mixtures thereof.

23. A composition according to any of claims 19 to 22, **characterized in that** the non aromatic bicyclic compound bearing at least one intracyclic double bond is caryophyllene.

24. A composition according to any one of claims 19 to 23, **characterized in that** the additional compound P represents 0.05 to 1, more preferably 0.1 to 0.5 parts by weight for one hundred parts by weight of polymerizable monomers.

25. A composition according to any one of claims 13 or 14, **characterized in that** the masking agent(s) and the perfume(s) represent(s) together at least 1.5 parts by weight for one hundred parts by weight of polymerizable monomers.

26. A composition according to any one of claims 15 to 18, **characterized in that** the masking agent(s) and the perfume(s) represent(s) together at least 1.1 parts by weight for one hundred parts by weight of polymerizable monomers.

27. An optical lens obtained through polymerizing a composition according to any one of the preceding claims.

28. An optical lens according to claim 27, **characterized in that** the lens is an ophthalmic lens.

29. An optical lens according to claim 28, **characterized in that** the lens is a spectacle glass.

30. A method for preparing a polythiourethane based substrate, comprising:
- preparing a first mixture comprising at least one polythiol monomer, at least one masking agent selected from cyclic ethers, and at least one perfume selected from polycyclic or macrocyclic musks,
- mixing, preferably cold-mixing, at least one polyisocyanate monomer with said first mixture so as to form a main mixture, and
- polymerizing said main mixture.

## Patentansprüche

1. Polymerisierbare Zusammensetzung, umfassend ein oder mehrere polymerisierbare Monomere, **dadurch gekennzeichnet, dass** sie zumindest ein maskierendes Mittel umfasst, ausgewählt unter den zyklischen Ethern und zumindest einem Geruchsstoff, ausgewählt unter dem natürlichen moschusartigen Geruchsstoffen und deren Extrakten, den synthetischen moschusartigen Geruchsstoffen, sowie Mischungen davon.

2. Zusammensetzung nach Anspruch 1, **dadurch gekennzeichnet, dass** sie einen oder mehrere Polymerisationsinitiator(en) umfasst.

3. Zusammensetzung nach Anspruch 1 oder 2, **dadurch gekennzeichnet, dass** sie zumindest 1 Monomer umfasst, ausgewählt unter den Monomeren, die zumindest ein Schwefelatom enthalten.

4. Zusammensetzung nach Anspruch 3, **dadurch gekennzeichnet, dass** die Monomere, die zumindest ein Schwefelatom enthalten, ausgewählt sind, unter den Polythio(meth)acrylatvorläufermonomeren, den Polythiourethanvorläufermonomeren, den Polythiourethanharnstoffvorläufermonomeren und den Polyschwefelwasserstoffvorläufermonomeren.

5. Zusammensetzung nach Anspruch 4, **dadurch gekennzeichnet, dass** die Zusammensetzung zumindest ein Polythiolmonomer und zumindest ein Polyisocyanatmonomer umfasst.

6. Zusammensetzung nach Anspruch 5, **dadurch gekennzeichnet, dass** das Polythiol der Gleichung genügt: 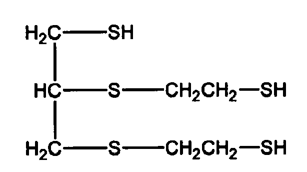 wobei das Polyisocyanat gebildet ist, gemäß der Gleichung C₆H₄(CH₂NCO)₂

7. Zusammensetzung nach Anspruch 1 oder 2, **dadurch gekennzeichnet, dass** das oder die Monomere ausgewählt sind unter den polyallyischen Vorläufermonomeren, den polymethacrylatischen Vorläufermonomeren, den copolymeren styrene/(meth)acrylatischen Vorläufermonomeren, den copolymeren, butadiene/(meth)acrylatischen Vorläufermonomeren, den Polyurethanvorläufermonomeren, den Harnstoffpolyurethanvorläufermonomeren, den Polyepoxidvorläufermonomeren und den Polycarbonatvorläufermonomeren.

8. Zusammensetzung nach einem der vorangegangenen Ansprüche, **dadurch gekennzeichnet, dass** das/die Maskierungsmittel ausgewählt ist/sind unter den polyzyklischen Ethern, bevorzugt den bizyklischen Ethern bzw. Alkoholen.

9. Zusammensetzung nach Anspruch 8, **dadurch gekennzeichnet, dass** das Maskierungsmittel gewählt ist unter dem 1,8 Cineol und dem 1,4 Cineol.

10. Zusammensetzung nach einem der vorangegangenen Ansprüche, **dadurch gekennzeichnet, dass** die synthetischen moschusartigen Geruchsmittel bzw. Verbindungen monozyklische, polyzyklische oder makrozyklische moschusartige Geruchsstoffe bzw. Verbindungen sind.

11. Zusammensetzung nach Anspruch 10, **dadurch gekennzeichnet, dass** die polyzyklischen moschusartigen Geruchsstoffe ausgewählt sind unter den Zusammensetzungen gemäß folgender Gleichungen:

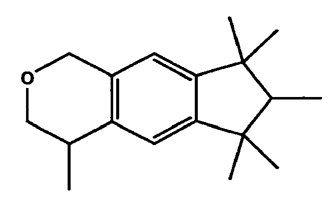

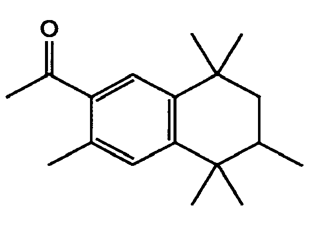

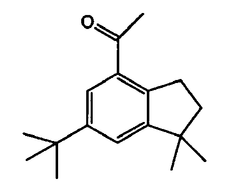

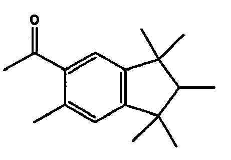

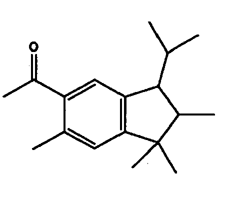

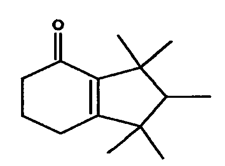

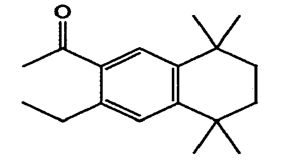

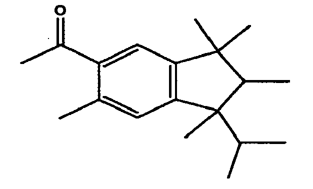

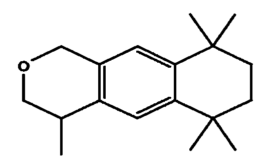

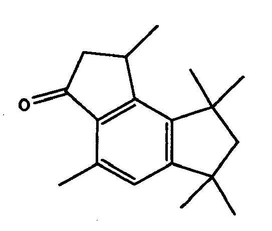

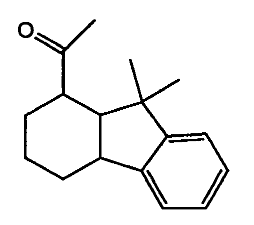

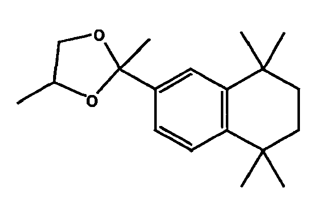

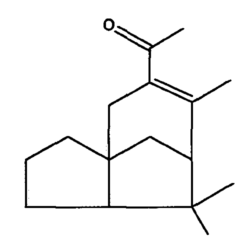

12. Zusammensetzung nach Anspruch 10, **dadurch gekennzeichnet, dass** die makrozyklischen, moschusartigen Geruchsstoffe ausgewählt sind unter den Zusammensetzung gemäß folgender Gleichungen:

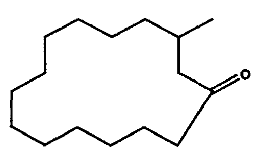

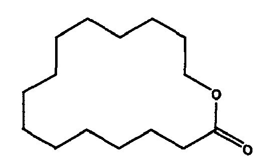

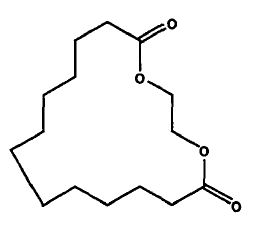

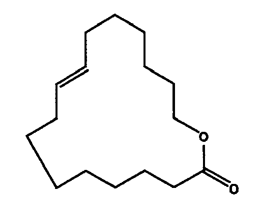

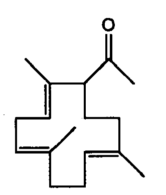

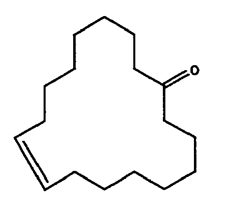

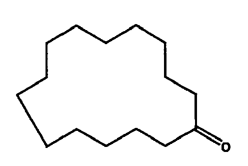

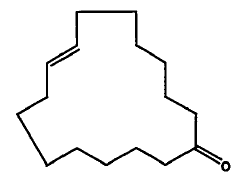

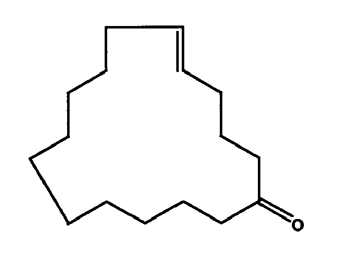

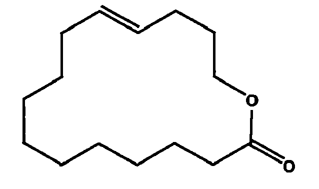

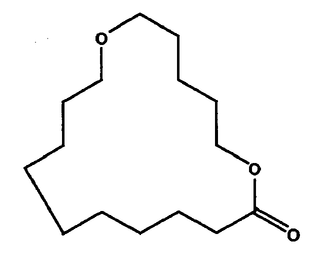

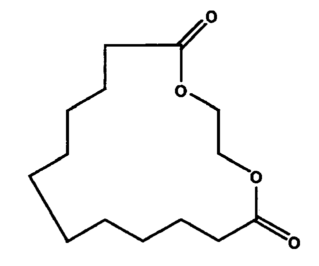

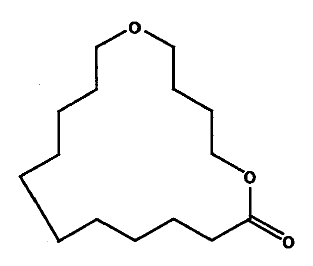

13. Zusammensetzung nach einem der vorangegangenen Ansprüche, **dadurch gekennzeichnet, dass** das/die Maskierungsmittel von 0,1 bis 3, bevorzugt von 0,5 bis 1,5 und insbesondere bevorzugt von 0,8 bis 1 Gewichtsprozent ausmacht/ausmachen bezüglich hundert Gewichtsteilen der polymerisierbaren Monomere.

14. Zusammensetzung nach einem der vorangegangenen Ansprüche, **dadurch gekennzeichnet, dass** der oder die Geruchsstoff(e) von 0,02 bis 3, bevorzugt von 0,1 bis 3, insbesondere bevorzugt von 0,2 bis 1,5 und noch bevorzugter von 0, 3 bis 1 Gewichtsprozent bezüglich des Gewichtes an polymerisierbaren Monomeren ausmacht/ausmachen.

15. Zusammensetzung nach einem der vorangegangenen Ansprüche, **dadurch gekennzeichnet, dass** sie ferner zumindest ein Aldehydderivat umfasst.

16. Zusammensetzung nach Anspruch 15, **dadurch gekennzeichnet, dass** das/die Aldehydderivat(e) ausgewählt ist/sind unter den in C4-C14 ungesättigten Aldehydderivaten.

17. Zusammensetzung nach Anspruch 16, **dadurch gekennzeichnet, dass** das/die Aldehydderivat(e) ausgewählt ist/sind unter dem cis4 dezenal und dem cis4 heptenal.

18. Zusammensetzung nach einem der Ansprüche 15 bis 17, **dadurch gekennzeichnet, dass** das/die Aldehydderivat(e) von 0,005 bis 1, bevorzugt von 0,02 bis 0,5 und insbesondere bevorzugt von 0,02 bis 0,1 Gewichtsprozent ausmachen bezüglich des Gewichtes an polymerisierbaren Monomeren.

19. Zusammensetzung nach einem der vorangegangenen Ansprüche, **dadurch gekennzeichnet, dass** sie einen Zusatzstoff P umfasst, wobei der Zusatzstoff P ein Geruchsstoff bzw. ein Parfüm oder eine Mischung von Geruchsstoffen bzw. Parfüms ist, wobei das bzw. die Parfüm(s) wie in den vorangehenden Ansprüchen definiert, und ausgewählt und den Terpenen, den alliphatischen oder aromatischen Esthern, den bizyklischen nicht aromatischen Zusammensetzungen, die zumindest eine intrazyklische Doppelbindung aufweisen, oder Mischungen davon.

20. Zusammensetzung nach Anspruch 19, **dadurch gekennzeichnet, dass** der Zusatzstoff P von 60 bis 90% an Gewicht von Terpenen, von 2 bis 15% an Gewicht von alliphatischen oder aromatischen Esthern, und von 2 bis 10% an Gewicht von bizyklischen nicht aromatischen Zusammensetzungen, umfassend zumindest eine intrazyklische Doppelbindung umfasst.

21. Zusammensetzung nach Anspruch 20, **dadurch gekennzeichnet, dass** die Terpene Limonenen sind, vorzugsweise ein R(+) Limonen.

22. Zusammensetzung nach einem der Ansprüche 19 bis 21, **dadurch gekennzeichnet, dass** die alliphatischen oder aromatischen Esther ausgewählt sind unter Ethylmethylphenylglycidat, Ethylhexonat sowie deren Mischungen.

23. Zusammensetzung nach einem der Ansprüche 19 bis 22, **dadurch gekennzeichnet, dass** die bizyklische nichtaromatische Zusammensetzung, die zumindest eine intrazyklische Doppelbindung umfasst Caryophyllen ist.

24. Zusammensetzung nach einem der Ansprüche 19 bis 23, **dadurch gekennzeichnet, dass** der Zusatzstoff P von 0,05 bis 1, bevorzugt von 0,1 bis 0,5 Anteile an Gewicht für 100 Anteile an Gewicht von polymerisierbaren Monomeren umfasst.

25. Zusammensetzung nach Anspruch 13 oder 14, **dadurch gekennzeichnet, dass** das/die Maskierungsmittel und der/die Geruchsstoff(e) bzw. das/die Parfüm(s) gemeinsam zumindest 1,5 Teile an Gewicht für hundert Teile an Gewicht von polymerisierbaren Monomeren ausmachen.

26. Zusammensetzung nach einem der Ansprüche 15 bis 18, **dadurch gekennzeichnet, dass** das/die Maskierungsmittel und der/die Geruchsstoffe bzw. das/die Parfüm(s) gemeinsam zumindest 1,1 Teile an Gewicht für hundert Teile an Gewicht an polymerisierbaren Monomeren ausmachen.

27. Optische Linsen erhalten mittels Polymerisation einer Zusammensetzung nach einem der vorangegangenen Ansprüche.

28. Optische Linsen nach Anspruch 27, **dadurch gekennzeichnet, dass** die Linse eine ophthalmische Linse ist.

29. Optische Linse nach Anspruch 28, **dadurch gekennzeichnet, dass** die Linse ein Brillenglas ist.

30. Verfahren zur Vorbereitung eines Substrates, basierend auf Polythiourethan, umfassend die folgenden Schritte:
- Vorbereitung einer ersten Mischung, umfassend zumindest ein Polythiolmonomer, zumindest ein Maskierungsmittel, ausgewählt unter den zyklischen Ethern und zumindest ein Geruchsstoff bzw. Parfüm, ausgewählt unter den polyzyklischen oder makrozyklischen moschusartigen Geruchsstoffen bzw. Verbindungen,
- Mischen, bevorzugt im Kalten, von zumindest einem Polyisozyanatmonomer mit der ersten Mischung, um eine Hauptmischung zu bilden, Polymerisation der Hauptmischung
